# EUROPEAN PATENT SPECIFICATION

(11) **EP 3 336 153 B1**
(45) Date of publication and mention of the grant of the patent: **25.11.2020**
(21) Application number: 16204949.8
(22) Date of filing: 19.12.2016
(51) Int. Cl.: C09J 7/38, C09J 133/04, C09J 7/22, C09J 7/26, C09J 153/02

(54) **RUBBER-BASED MULTILAYER PRESSURE-SENSITIVE ADHESIVE ASSEMBLY HAVING LOW VOC CHARACTERISTICS**
GUMMIBASIERTE MEHRSCHICHTIGE DRUCKEMPFINDLICHE KLEBSTOFFANORDNUNG MIT GERINGEN FLÜCHTIGEN ORGANISCHEN VERBINDUNGSEIGENSCHAFTEN
ADHÉSIF SENSIBLE À LA PRESSION, MULTICOUCHES À BASE DE CAOUTCHOUC PRÉSENTANT DES CARACTÉRISTIQUES À FAIBLE TENEUR EN COV

(43) Date of publication of application: 20.06.2018
(73) Proprietor: 3M Innovative Properties Company, Saint Paul, MN 55133-3427 (US)
(72) Inventor: Eckhardt, Doreen, 41453 Neuss (DE); Matzeit, Niklas, 41453 Neuss (DE); Kluenker, Eike, 41453 Neuss (DE); Waid, Robert Denis, Saint Paul, MN Minnesota 55133-3427 (US); Chastek, Thomas Q, St. Paul, MN 55133-3427 (US); Bieber, Pierre, 41453 Neuss (DE); Stegmaier, Petra, 41453 Neuss (DE)
(74) Representative: Hettstedt, Stephan

(56) References cited:
- EP-A1- 2 133 396
- EP-A1- 3 020 774
- US-A1- 2012 058 329
- US-A1- 2016 145 406

## Description

### Technical Field

The present disclosure relates generally to the field of pressure sensitive adhesives (PSA), more specifically to the field of multilayer rubber-based pressure sensitive adhesive assemblies. The present disclosure also relates to a method of manufacturing such pressure sensitive adhesive assemblies and uses thereof.

### Background

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives.

Pressure-sensitive tapes are virtually ubiquitous in the home and workplace. In its simplest configuration, a pressure-sensitive tape comprises an adhesive and a backing, and the overall construction is tacky at the use temperature and adheres to a variety of substrates using only moderate pressure to form the bond. In this fashion, pressure-sensitive tapes constitute a complete, self-contained bonding system.

Pressure sensitive adhesives (PSAs) are well known to one of ordinary skill in the art, and according to the Pressure-Sensitive Tape Council, PSAs are known to possess properties including the following: (1) aggressive and permanent tack, (2) adherence with no more than finger pressure, (3) sufficient ability to hold onto an adherend, and (4) sufficient cohesive strength. Materials that have been found to function well as PSAs include polymers designed and formulated to exhibit the requisite viscoelastic properties resulting in a desired balance of tack, peel adhesion, and shear holding power. PSAs are characterized by being normally tacky at room temperature (e.g., 20°C). PSAs do not embrace compositions merely because they are sticky or adhere to a surface.

These requirements are assessed generally by means of tests which are designed to individually measure tack, adhesion (peel strength), and cohesion (shear holding power), as noted in A.V. Pocius in Adhesion and Adhesives Technology: An Introduction, 2nd Ed., Hanser Gardner Publication, Cincinnati, OH, 2002. These measurements taken together constitute the balance of properties often used to characterize a PSA.

With broadened use of pressure-sensitive tapes over the years, performance requirements have become more demanding. Shear holding capability, for example, which originally was intended for applications supporting modest loads at room temperature, has now increased substantially for many applications in terms of operating temperature and load. Many applications require pressure sensitive adhesives to support a load at elevated temperatures, typically in the range of from 70°C to 120°C, for which high cohesive strengths are required. Similarly, an increased need has arisen for pressure sensitive adhesives having improved and versatile adhesion characteristics; in particular with respect to peel forces and shear resistance on various types of difficult to adhere surfaces, such as in particular the so-called low surface energy (LSE) and medium surface energy (MSE) substrates.

In addition to increasing performance requirements with regard to pressure sensitive adhesives, volatile organic compounds (VOC) reduction regulations are becoming increasingly important in particular for various kind of interior applications (occupational hygiene and occupational safety) such as e.g. in the construction market or in the automotive or electronics industries. Known acrylate-based pressure sensitive adhesives typically contain notable amounts of low molecular weight organic residuals, such as un-reacted monomers arising from their polymerization process, polymerization initiator residuals, contaminations from raw materials or degradation products formed during the manufacturing process. These low molecular weight residuals qualifying as VOC may diffuse out of the adhesive tape and can be potentially harmful. Known acrylate-based pressure sensitive adhesives, if not crosslinked, also generally suffer from lack of cohesive strength and excessive tendency to flow. This aspect may render the application and processability of uncrosslinked acrylate-based pressure sensitive adhesives particularly problematic, especially when made by a hotmelt process.

The reduction of organic solvent usage in the manufacturing process of pressure sensitive adhesives has quickly emerged as one straightforward means to reduce the overall VOC levels. The use of specific scavengers for organic contaminants, as described in WO 01/44400 (Yang), is another alternative way to achieve reduced VOC levels. However, the solutions for reducing overall VOC levels known from the prior art are often associated with increased manufacturing complexity and production costs.

The pressure sensitive adhesive materials known from the prior art do not often provide sufficient robustness and/or tack to various types of substrate, including the so-called LSE and MSE substrates, in combination with reduced VOC level characteristics. In particular, the overall VOC levels observed do often not fulfill the requirements for various kind of interior applications such as e.g. in the construction market or in the automotive or electronics industries. Partial solutions have been described e.g. in US 2003/0082362 A1 (Khandpur et al.), in US 2004/0082700 A1 (Khandpur et al.), and in US 2014/0057091 A1 (Krawinkel et al.), EP 3020774A1 (3M Innovative Properties Co.), US 2016/145406 A1 (Bieber et al.), US 2012/058329 A1 (Sakurai et al.), EP 2133396 A1 (Nitto Denko Corp.).

Without contesting the technical advantages associated with the pressure sensitive adhesives known in the art, there is still a need for a robust and cost-effective multilayer pressure sensitive adhesive assembly providing reduced overall VOC levels whilst providing excellent and versatile adhesion characteristics, in particular with respect to various types of substrate, including LSE and MSE substrates. Other advantages of the pressure sensitive adhesive assemblies and methods of the disclosure will be apparent from the following description.

### Summary

According to one aspect, the present disclosure relates to a multilayer pressure sensitive adhesive assembly comprising a polymeric foam layer and a first pressure sensitive adhesive layer adjacent to the polymeric foam layer, wherein the polymeric foam comprises:
a) a multi-arm block copolymer having the formula Qₙ-Y, wherein:
   (i) Q represents an arm of the multi-arm block copolymer and each arm independently has the formula G-R,
   (ii) n represents the number of arms and is a whole number of at least 3, and
   (iii) Y is the residue of a multifunctional coupling agent,
   wherein each R is a rubbery block comprising a polymerized conjugated diene, a hydrogenated derivative of a polymerized conjugated diene, or combinations thereof; and each G is a glassy block comprising a polymerized monovinyl aromatic monomer;
b) a polymeric plasticizer having a weight average molecular weight Mw of at least 10.000 g/mol;
c) at least one hydrocarbon tackifier, wherein the hydrocarbon tackifier(s) have a Volatile Organic Compound (VOC) value of less than 1000 ppm, when measured by thermogravimetric analysis according to the weight loss test methods described in the experimental section; and
d) optionally, a linear block copolymer having the formula L - (G)ₘ, wherein L is a rubbery block comprising a polymerized olefin, a polymerized conjugated diene, a hydrogenated derivative of a polymerized conjugated diene, or any combinations thereof; and wherein m is 1 or 2;
and wherein the first pressure sensitive adhesive comprises:
a) a linear block copolymer having the formula M - (G)ₚ, wherein M is a rubbery block comprising a polymerized olefin, a polymerized conjugated diene, a hydrogenated derivative of a polymerized conjugated diene, or any combinations thereof; and wherein p is 1 or 2;
b) at least one second hydrocarbon tackifier;
c) a (meth)acrylate copolymer having a Tg higher than 25°C and a weight average molecular weight (Mw) comprised between 1000 and 100.000 Daltons, and comprising:
   (i) (meth)acrylic acid ester monomer units having a Tg higher than 25°C when homopolymerized; and
   (ii) optionally, monofunctional ethylenically unsaturated comonomer units;
d) optionally, a multi-arm block copolymer having the formula S_{q}-Z, wherein:
   (i) S represents an arm of the multi-arm block copolymer and each arm independently has the formula G-N,
   (ii) q represents the number of arms and is a whole number of at least 3, and
   (iii) Z is the residue of a multifunctional coupling agent,
   wherein each N is a rubbery block comprising a polymerized conjugated diene, a hydrogenated derivative of a polymerized conjugated diene, or combinations thereof; and
e) optionally, a diblock copolymer having the formula T - (G), wherein T is a rubbery block comprising a polymerized olefin, a polymerized conjugated diene, a hydrogenated derivative of a polymerized conjugated diene, or any combinations thereof.

In another aspect, the present disclosure is directed to a method of manufacturing a multilayer pressure sensitive adhesive assembly as described above, which comprises the step of melt co-extruding, in particular hotmelt co-extruding the polymeric foam layer and the first pressure sensitive adhesive layer.

According to still another aspect, the present disclosure relates to the use of a multilayer pressure sensitive adhesive assembly as described above for industrial applications, preferably for interior applications, more preferably for construction market applications, automotive applications or electronic applications.

### Detailed description

According to a first aspect, the present disclosure relates to a multilayer pressure sensitive adhesive assembly comprising a polymeric foam layer and a first pressure sensitive adhesive layer adjacent to the polymeric foam layer, wherein the polymeric foam comprises:
a) a multi-arm block copolymer having the formula Qₙ-Y, wherein:
   (i) Q represents an arm of the multi-arm block copolymer and each arm independently has the formula G-R,
   (ii) n represents the number of arms and is a whole number of at least 3, and
   (iii) Y is the residue of a multifunctional coupling agent,
   wherein each R is a rubbery block comprising a polymerized conjugated diene, a hydrogenated derivative of a polymerized conjugated diene, or combinations thereof; and each G is a glassy block comprising a polymerized monovinyl aromatic monomer;
b) a polymeric plasticizer having a weight average molecular weight Mw of at least 10.000 g/mol;
c) at least one hydrocarbon tackifier, wherein the hydrocarbon tackifier(s) have a Volatile Organic Compound (VOC) value of less than 1000 ppm, when measured by thermogravimetric analysis according to the weight loss test methods described in the experimental section; and
d) optionally, a linear block copolymer having the formula L - (G)ₘ, wherein L is a rubbery block comprising a polymerized olefin, a polymerized conjugated diene, a hydrogenated derivative of a polymerized conjugated diene, or any combinations thereof; and wherein m is 1 or 2;
and wherein the first pressure sensitive adhesive comprises:
a) a linear block copolymer having the formula M - (G)ₚ, wherein M is a rubbery block comprising a polymerized olefin, a polymerized conjugated diene, a hydrogenated derivative of a polymerized conjugated diene, or any combinations thereof; and wherein p is 1 or 2;
b) at least one second hydrocarbon tackifier;
c) a (meth)acrylate copolymer having a Tg higher than 25°C and a weight average molecular weight (Mw) comprised between 1000 and 100.000 Daltons, and comprising:
   (i) (meth)acrylic acid ester monomer units having a Tg higher than 25°C when homopolymerized; and
   (ii) optionally, monofunctional ethylenically unsaturated comonomer units;
d) optionally, a multi-arm block copolymer having the formula S_{q}-Z, wherein:
   (i) S represents an arm of the multi-arm block copolymer and each arm independently has the formula G-N,
   (ii) q represents the number of arms and is a whole number of at least 3, and
   (iii) Z is the residue of a multifunctional coupling agent,
   wherein each N is a rubbery block comprising a polymerized conjugated diene, a hydrogenated derivative of a polymerized conjugated diene, or combinations thereof; and
e) optionally, a diblock copolymer having the formula T - (G), wherein T is a rubbery block comprising a polymerized olefin, a polymerized conjugated diene, a hydrogenated derivative of a polymerized conjugated diene, or any combinations thereof.

In the context of the present disclosure, it has been surprisingly found that a multilayer pressure sensitive adhesive assembly comprising a polymeric foam layer and a first pressure sensitive adhesive layer adjacent to the polymeric foam layer; wherein the polymeric foam comprises a multi-arm block copolymer having the formula Qₙ-Y as described above, a polymeric plasticizer having a weight average molecular weight Mw of at least 10.000 g/mol and at least one hydrocarbon tackifier as described above; and wherein the first pressure sensitive adhesive comprises a linear block copolymer having the formula M - (G)ₚ as described above, at least one second hydrocarbon tackifier, and a (meth)acrylate copolymer having a Tg higher than 25°C and a weight average molecular weight (Mw) comprised between 1000 and 100.000 Daltons as described above, provides outstanding robustness and excellent characteristics and performance as to overall VOC levels reduction.

In some advantageous aspects, the multilayer pressure sensitive adhesive assemblies as described herein are characterized by very low or even substantial absence of perceptible odor. In some aspects, the multilayer pressure sensitive adhesive assemblies according to the present disclosure are characterized by further providing excellent characteristics and performance as to overall fogging levels reduction. The low fogging characteristics typically translate into improved resistance of outgassed components to condensation, as well as improved thermal stability of the corresponding pressure sensitive adhesive assembly.

In addition, the multilayer pressure sensitive adhesive assemblies as described herein provide surprisingly good overall balance of adhesive and cohesive characteristics (in particular with respect to peel forces and static shear resistance) on various types of substrates, including LSE and MSE substrates, and in particular on automotive clear coats, on plastic substrates such as e.g. TPO, PP or PP/EPDM commonly used in the automotive industry, automotive varnishes or automotive paints.

In some advantageous aspects of the present disclosure according to which the multilayer pressure sensitive adhesive assembly is preferably obtained by melt co-extrusion, in particular hotmelt co-extrusion of the polymeric foam layer and the first pressure sensitive adhesive layer, the resulting multilayer pressure sensitive adhesive assemblies as described herein provide excellent resistance to delamination, even at high temperatures such as e.g. 70°C and even higher. According to the same advantageous aspect, the multilayer pressure sensitive adhesive assemblies according to the present disclosure beneficially provide excellent surface and interface properties, which is particularly surprising in those executions where the polymeric foam layer is foamed with expandable microspheres. Without wishing to be bound by theory, it is believed that these outstanding properties are due to the compounds used to form the polymeric foam layer and the first pressure sensitive layer being in melted state at the time the co-extrusion process step is performed. This results into smoother surface of the first pressure sensitive layer outer surface and smoother interface (void-free interface) between the polymeric foam layer and the first pressure sensitive layer. The excellent surface and interface properties of the multilayer pressure sensitive adhesive assemblies according to the present disclosure result into better wetting on the substrate to adhere to and therefore into improved adhesion properties.

As such, the multilayer pressure sensitive adhesive assemblies according to the present disclosure are particularly suited for (industrial) interior applications, more in particular for construction market applications, automotive applications or electronic applications. In the context of automotive applications, the multilayer pressure sensitive adhesive assemblies as described herein may find particular use for adhering e.g. automotive body side mouldings, weather strips or rearview mirrors. In some aspects, the multilayer pressure sensitive adhesive assemblies according to the present disclosure are provided with advantageous low fogging characteristics, which are particularly suited for electronic applications.

In the context of the present disclosure, the expression "low surface energy substrates" is meant to refer to those substrates having a surface energy of less than 34 dynes per centimeter. Included among such materials are polypropylene, polyethylene (e.g., high density polyethylene or HDPE, low density polyethylene or LDPE, LLDPE), and blends of polypropylene (e.g. PP/EPDM, TPO).

In the context of the present disclosure, the expression "medium surface energy substrates" is meant to refer to those substrates having a surface energy comprised between 34 and 70 dynes per centimeter, typically between 34 and 60 dynes per centimeter, and more typically between 34 and 50 dynes per centimeter. Included among such materials are polyamide 6 (PA6), acrylonitrile butadiene styrene (ABS), PC/ABS blends, PC, PVC, PA, polyurethane, PUR, TPE, POM, polystyrene, poly(methyl methacrylate) (PMMA), clear coat surfaces, in particular clear coats for vehicles like a car or coated surfaces for industrial applications and composite materials like fiber reinforced plastics.

The surface energy is typically determined from contact angle measurements as described, for example, in ASTM D7490-08.

In a typical aspect, a rubbery block for use herein exhibits a glass transition temperature (Tg) of less than room temperature. In some aspects, the Tg of the rubbery block is less than about 0 °C, or even less than about -10 °C. In some aspects, the Tg of the rubbery block is less than about -40 °C, or even less than about -60°C.

In a typical aspect, a glassy block for use herein exhibits a Tg of greater than room temperature. In some embodiments, the Tg of the glassy block is at least about 40°C, at least about 60 °C, at least about 80°C, or even at least about 100°C.

The terms "glass transition temperature" and "Tg" are used interchangeably and refer to the glass transition temperature of a material or a mixture. Unless otherwise indicated, glass transition temperature values are determined by Differential Scanning Calorimetry (DSC).

According to the present disclosure, the polymeric foam for use herein comprises:
a) a multi-arm block copolymer having the formula Qₙ-Y, wherein:
   (i) Q represents an arm of the multi-arm block copolymer and each arm independently has the formula G-R,
   (ii) n represents the number of arms and is a whole number of at least 3, and
   (iii) Y is the residue of a multifunctional coupling agent,
   wherein each R is a rubbery block comprising a polymerized conjugated diene, a hydrogenated derivative of a polymerized conjugated diene, or combinations thereof; and each G is a glassy block comprising a polymerized monovinyl aromatic monomer;
b) a polymeric plasticizer having a weight average molecular weight Mw of at least 10.000 g/mol;
c) at least one hydrocarbon tackifier, wherein the hydrocarbon tackifier(s) have a Volatile Organic Compound (VOC) value of less than 1000 ppm, when measured by thermogravimetric analysis according to the weight loss test methods described in the experimental section; and
d) optionally, a linear block copolymer having the formula L - (G)ₘ, wherein L is a rubbery block comprising a polymerized olefin, a polymerized conjugated diene, a hydrogenated derivative of a polymerized conjugated diene, or any combinations thereof; and wherein m is 1 or 2;

In a particular aspect of the present disclosure, the multi-arm styrenic block copolymer having the formula Qₙ-Y for use herein is such that n ranges from 3 to 10 or even from 3 to 5. In some other aspects, n is 4, while in some other executions, n is equal to 6 or more.

Suitable rubbery blocks R for use herein comprise polymerized conjugated dienes, hydrogenated derivatives of a polymerized conjugated diene, or combinations thereof. In some typical aspects, the rubbery block R of at least one arm comprises a polymerized conjugated diene selected from the group consisting of isoprene, butadiene, ethylene butadiene copolymers, hydrogenated derivatives of polyisoprene or polybutadiene, and any combinations or mixtures thereof. According to an advantageous aspect, the rubbery blocks R of each arm comprise a polymerized conjugated diene selected from the group consisting of isoprene, butadiene, ethylene butadiene copolymers, hydrogenated derivatives of polyisoprene or polybutadiene, and combinations or mixtures thereof.

According to a preferred aspect of the multilayer pressure sensitive adhesive assembly according to the present disclosure, at least one of the rubbery blocks R of the multi-arm block copolymer having the formula Qₙ-Y comprises a conjugated diene selected from the group consisting of isoprene, butadiene, and any combinations thereof. More preferably, each of the rubbery blocks R of the multi-arm block copolymer having the formula Qₙ-Y comprises a conjugated diene selected from the group consisting of isoprene, butadiene, and any combinations thereof.

According to a particularly advantageous aspect of the multilayer pressure sensitive adhesive assembly according to the present disclosure, at least one arm of the multi-arm block copolymer having the formula Qₙ-Y is selected from the group consisting of styrene-isoprene-styrene, styrene-butadiene-styrene, styrene-ethylene-butylene-styrene, styrene-ethylene-propylene-styrene, and combinations thereof. More preferably, each arm of the multi-arm block copolymer having the formula Qₙ-Y is selected from the group consisting of styrene-isoprene-styrene, styrene-butadiene-styrene, styrene-ethylene-butylene-styrene, styrene-ethylene-propylene-styrene, and any combinations thereof. Even more preferably, each arm of the multi-arm block copolymer having the formula Qₙ-Y is selected from the group consisting of styrene-isoprene-styrene, styrene-butadiene-styrene, and any combinations thereof.

Suitable glassy blocks G for use in the multi-arm block copolymer having the formula Qₙ-Y herein comprise a polymerized monovinyl aromatic monomer. In some typical aspects, the glassy block G of at least one arm comprises a monovinyl aromatic monomer selected from the group consisting of styrene, styrene-compatible blends, and any combinations thereof. According to an advantageous aspect, the glassy blocks G of each arm comprise a monovinyl aromatic monomer selected from the group consisting of styrene, styrene-compatible blends, and any combinations thereof.

According to an advantageous execution of the present disclosure, the multi-arm block copolymer having the formula Qₙ-Y for use herein is a (multi-arm) star block copolymer. In a more advantageous aspect of the multilayer pressure sensitive adhesive assembly according to the present disclosure, the multi-arm block copolymer having the formula Qₙ-Y is a polymodal block copolymer. As used herein, the term "polymodal" means that the copolymer comprises endblocks having at least two different molecular weights. Such a block copolymer may also be characterized as having at least one "high" molecular weight endblock, and at least one "low" molecular weight endblock, wherein the terms high and low are used relative to each other. In some particular aspects, the ratio of the number average molecular weight of the high molecular weight endblock, (Mn)H, relative to the number average molecular weight of the low molecular weight endblock,(Mn)L, is at least about 1.25.

In some particular aspects, (Mn)H ranges from about 5000 to about 50000. In some embodiments, (Mn)H is at least about 8000, and in some aspects at least about 10000. In some aspects, (Mn)H is no greater than about 35000. In some aspects, (Mn)L ranges from about 1000 to about 10000. In some aspects, (Mn)L is at least about 2000, and, in some aspects, at least about 4000. In some aspects, (Mn)L is less than about 9000, and, in some aspects, less than about 8000.

According to another beneficial aspect, the multi-arm block copolymer having the formula Qₙ-Y is an asymmetric block copolymer. As used herein, the term "asymmetric" means that the arms of the block copolymer are not all identical. Generally, a polymodal block copolymer is an asymmetric block copolymer (i.e., a polymodal asymmetric block copolymer) as not all arms of a polymodal block copolymer are identical since the molecular weights of the end blocks are not all the same. In some aspects, the multi-arm block copolymers of the present disclosure are polymodal, asymmetric block copolymers.

Multi-arm block copolymers for use herein are described e.g. in US 7,163,741 B1 (Khandpur et al.). Methods of making multi-arm block copolymers, in particular polymodal asymmetric, block copolymers are described in, e.g., U.S. Patent No. 5,296,547 (Nestegard et al.), or in U.S. Patent No. 5,393,787 (Nestegard et al.).

Generally, the multifunctional coupling agent Y for use herein may be any polyalkenyl coupling agent or other material known to have functional groups that can react with carbanions of the living polymer to form linked polymers. The polyalkenyl coupling agent may be aliphatic, aromatic, or heterocyclic. Exemplary aliphatic polyalkenyl coupling agents include, but are not limited to, polyvinyl and polyalkyl acetylenes, diacetylenes, phosphates, phosphites, and dimethacrylates (e.g., ethylene dimethacrylate). Exemplary aromatic polyalkenyl coupling agents include but are not limited to, polyvinyl benzene, polyvinyl toluene, polyvinyl xylene, polyvinyl anthracene, polyvinyl naphthalene, and divinyldurene. Exemplary polyvinyl groups include, but are not limited to, divinyl, trivinyl, and tetravinyl groups. In some aspects, divinylbenzene (DVB) may be used, and may include o- divinyl benzene, m-divinyl benzene, p-divinyl benzene, and mixtures thereof. Exemplary heterocyclic polyalkenyl coupling agents include, but are not limited to, divinyl pyridine, and divinyl thiophene. Other exemplary multifunctional coupling agents include, but are not limited to, silicon halides, polyepoxides, polyisocyanates, polyketones, polyanhydrides, and dicarboxylic acid esters.

According to a typical aspect, the multi-arm block copolymer having the formula Qₙ-Y as described above is used for example in amounts of up to 80 wt%, based on the weight of the polymeric foam. In some exemplary aspects, the amount of multi-arm block copolymer having the formula Qₙ-Y can be for example, in the range of from 20 wt% to 80 wt%, from 20 wt% to 70 wt%, from 25 wt% to 60 wt%, or even from 25 wt% to 50 wt%, based on the weight of the polymeric foam.

In a particular aspect of the multilayer pressure sensitive adhesive assembly according to the present disclosure, the hydrocarbon tackifier(s) for use herein in the polymer foam have a Volatile Organic Compound (VOC) value of less than 800 ppm, less than 600 ppm, less than 400 ppm or even less than 200 ppm, when measured by thermogravimetric analysis according to the weight loss test method described in the experimental section.

According to a preferred aspect, the hydrocarbon tackifier(s) for use herein in the polymer foam have a Volatile Fogging Compound (FOG) value of less than 1500 ppm, less than 1000 ppm, less than 800 ppm, less than 600 ppm, or even less than 500 ppm, when measured by thermogravimetric analysis according to the weight loss test methods described in the experimental section. In the context of the present disclosure, it has been found that a polymeric foam comprising a multi-arm block copolymer having the formula Qₙ-Y as described above, a polymeric plasticizer having a weight average molecular weight Mw of at least 10.000 g/mol and at least one hydrocarbon tackifier, wherein the hydrocarbon tackifier(s) have a Volatile Fogging Compound (FOG) value of less than 1500 ppm, less than 1000 ppm, less than 800 ppm, less than 600 ppm, or even less than 500 ppm, when measured by thermogravimetric analysis according to the weight loss test method described in the experimental section, provide excellent characteristics and performance as to resistance of outgassed components to condensation and/or thermal stability of the corresponding multilayer pressure sensitive adhesive assembly. Multilayer pressure sensitive adhesive assemblies provided with advantageous low fogging characteristics are particularly suited for electronic applications.

Preferably still, the hydrocarbon tackifier(s) for use herein have an outgassing value of less than 1 wt%, less than 0.8 wt%, less than 0.6 wt%, less than 0.5 wt%, less than 0.4 wt%, less than 0.3 wt%, less than 0.2 wt% or even less than 0.1 wt%, when measured by weight loss analysis according to the oven outgassing test method described in the experimental section. In the context of the present disclosure, it has been found that a polymeric foam comprising a multi-arm block copolymer having the formula Qₙ-Y as described above, a polymeric plasticizer having a weight average molecular weight Mw of at least 10.000 g/mol and at least one hydrocarbon tackifier, wherein the hydrocarbon tackifier(s) have an outgassing value of less than 1 wt%, less than 0.8 wt%, less than 0.6 wt%, less than 0.5 wt%, less than 0.4 wt%, less than 0.3 wt%, less than 0.2 wt% or even less than 0.1 wt%, when measured by weight loss analysis according to the oven outgassing test method described in the experimental section, provide excellent thermal stability.

Any hydrocarbon tackifiers typically included in conventional pressure-sensitive adhesive compositions may be used in the context of the present disclosure, as long as they fulfill the above-detailed VOC requirements and preferably the above-detailed FOG level requirements too. Useful hydrocarbon tackifiers are typically selected to be miscible with the (co)polymeric material. Suitable hydrocarbon tackifier(s) for use herein may be easily identified by those skilled in the art, in the light of the present disclosure.

Either solid or liquid hydrocarbon tackifiers may be added, although solid hydrocarbon tackifiers are preferred. Solid tackifiers generally have a number average molecular weight (Mw) of 10,000 grams per mole or less and a softening point above about 70°C. Liquid tackifiers are viscous materials that have a softening point of about 0°C to about 20°C.

Suitable tackifying resins may include terpene resins such as polyterpenes (e.g., alpha pinene-based resins, beta pinene-based resins, and limonene-based resins) and aromatic-modified polyterpene resins (e.g., phenol modified polyterpene resins); coumarone-indene resins; and petroleum-based hydrocarbon resins such as C5-based hydrocarbon resins, C9-based hydrocarbon resins, C5/C9-based hydrocarbon resins, and dicyclopentadiene-based resins. These tackifying resins, if added, can be hydrogenated to lower their color contribution to the particular pressure-sensitive adhesive composition. Combinations of various tackifiers can be used if desired, as long as they fulfill the above-detailed VOC requirements and preferably the above-detailed FOG level requirements too.

Tackifiers that are hydrocarbon resins can be prepared from various petroleum-based feed stocks. There feedstocks can be aliphatic hydrocarbons (mainly C5 monomers with some other monomers present such as a mixture of trans-1,3-pentadiene, cis-1,3-pentadiene, 2-methyl-2-butene, dicyclopentadiene, cyclopentadiene, and cyclopentene), aromatic hydrocarbons (mainly C9 monomers with some other monomers present such as a mixture of vinyl toluenes, dicyclopentadiene, indene, methylstyrene, styrene, and methylindenes), or mixtures thereof. Tackifiers derived from C5 monomers are referred to as C5-based hydrocarbon resins while those derived from C9 monomers are referred to as C9-based hydrocarbon resins. Some tackifiers are derived from a mixture of C5 and C9 monomers or are a blend of C5-based hydrocarbon tackifiers and C9-based hydrocarbon tackifiers. These tackifiers can be referred to as C5/C9-based hydrocarbon tackifiers. Any of these resins can be partially or fully hydrogenated to improve their color, their thermal stability or their process compatibility.

The C5-based hydrocarbon resins are commercially available from Eastman Chemical Company under the trade designations PICCOTAC and EASTOTAC, from Cray Valley under the trade designation WINGTACK, from Neville Chemical Company under the trade designation NEVTAC LX, and from Kolon Industries, Inc. under the trade designation HIKOREZ. The C5-based hydrocarbon resins are commercially available from Eastman Chemical with various degrees of hydrogenation under the trade designation EASTOTACK.

The C9-based hydrocarbon resins are commercially available from Eastman Chemical Company under the trade designation PICCO, KRISTLEX, PLASTOLYN, and PICCOTAC, and ENDEX, from Cray Valley under the trade designations NORSOLENE, from Ruetgers N.V. under the trade designation NOVAREZ, and from Kolon Industries, Inc. under the trade designation HIKOTAC. These resins can be partially or fully hydrogenated. Prior to hydrogenation, the C9-based hydrocarbon resins are often about 40 percent aromatic as measured by proton Nuclear Magnetic Resonance. Hydrogenated C9-based hydrocarbon resins are commercially available, for example, from Eastman Chemical under the trade designations REGALITE and REGALREZ that are 50 to 100 percent (e.g., 50 percent, 70 percent, 90 percent, and 100 percent) hydrogenated. The partially hydrogenated resins typically have some aromatic rings.

Various C5/C9-based hydrocarbon tackifiers are commercially available from Arakawa under the trade designation ARKON, from Zeon under the trade designation QUINTONE, from Exxon Mobil Chemical under the trade designation ESCOREZ, and from Newport Industries under the trade designations NURES and H-REZ (Newport Industries). In the context of the present disclosure, suitable hydrocarbon tackifiers for use herein may be advantageously selected among those C5/C9-based hydrocarbon tackifiers commercially available from Exxon Mobil Chemical under the trade designation ESCOREZ.

According to a preferred aspect of the multilayer pressure sensitive adhesive assembly of the present disclosure, the hydrocarbon tackifier for use herein is selected from the group consisting of aliphatic hydrocarbon resins, cycloaliphatic hydrocarbon resins, aromatic modified aliphatic and cycloaliphatic resins, aromatic resins, hydrogenated hydrocarbon resins, terpene and modified terpene resins, terpene-phenol resins, rosin esters, and any combinations or mixtures thereof.

In an advantageous aspect of the present disclosure, the tackifying resin is selected from the group consisting of C5-based hydrocarbon resins, C9-based hydrocarbon resins, C5/C9-based hydrocarbon resins, and any combinations or mixtures thereof. In another advantageous aspect, the tackifying resin is selected from the group consisting of hydrogenated terpene resins, hydrogenated rosin resins, hydrogenated C5-based hydrocarbon resins, hydrogenated C9-based hydrocarbon resins, hydrogenated C5/C9-based hydrocarbon resins, and any combinations or mixtures thereof.

According to an advantageous aspect, the polymeric foam for use herein comprises at least one hydrocarbon tackifier having a Volatile Organic Compound (VOC) value of less than 1000 ppm, when measured by thermogravimetric analysis according to the weight loss test methods described in the experimental section, wherein the hydrocarbon tackifier has preferably a Tg of at least 60°C, and wherein preferably the hydrocarbon tackifier is primarily compatible with the rubbery blocks R and optionally, the rubbery blocks L.

In an advantageous aspect, the hydrocarbon tackifier is primarily compatible with at least some of the rubbery blocks R and optionally, the rubbery blocks L. In some aspects, the hydrocarbon tackifier is primarily compatible with each rubbery block R of a multi-arm block copolymer and with the rubbery blocks L of the linear block copolymer having the formula L - (G)ₘ.

As used herein, a tackifier is "compatible" with a block if it is miscible with that block. Generally, the miscibility of a tackifier with a block can be determined by measuring the effect of the tackifier on the Tg of that block. If a tackifier is miscible with a block, it will alter (e.g., increase) the Tg of that block. A tackifier is "primarily compatible" with a block if it is at least miscible with that block, although it may also be miscible with other blocks. For example, a tackifier that is primarily compatible with a rubbery block will be miscible with the rubbery block, but may also be miscible with a glassy block.

Generally, resins having relatively low solubility parameters tend to associate with the rubbery blocks; however, their solubility in the glassy blocks tends to increase as the molecular weights or softening points of these resins are lowered.

Exemplary hydrocarbon tackifiers that are primarily compatible with the rubbery blocks R and optionally L, are advantageously selected from the group consisting of polymeric terpenes, hetero-functional terpenes, coumarone-indene resins, rosin acids, esters of rosin acids, disproportionated rosin acid esters, hydrogenated, C5 aliphatic resins, C9 hydrogenated aromatic resins, C5/C9 aliphatic/aromatic resins, dicyclopentadiene resins, hydrogenated hydrocarbon resins arising from C5/C9 and dicyclopentadiene precursors, hydrogenated styrene monomer resins, and any blends thereof.

According to a typical aspect of the multilayer pressure sensitive adhesive assembly, the total amount of the hydrocarbon tackifier(s) in the polymeric foam is comprised between 20 wt% and 70 wt%, between 25 wt% and 60 wt%, or even between 25 wt% and 50 wt%, based on the weight of the polymeric foam.

According to another typical aspect of the multilayer pressure sensitive adhesive assembly, the ratio of the total weight of all block copolymers to the total weight of all hydrocarbon tackifiers in the polymeric foam ranges from 2.4:1 to 1:2.4, from 2:1 to 1:2, from 1.5:1 to 1:1.5, from 1.2:1 to 1:1.2, from 1.15:1 to 1:1.15, or even from 1.1:1 to 1:1.1.

The polymeric foam for use in the present disclosure further comprises a polymeric plasticizer having a weight average molecular weight Mw of at least 10.000 g/mol. Any polymeric plasticizers typically known by those skilled in the art may be used in the context of the present disclosure as long as they fulfill the above weight average molecular weight requirement.

The use of polymeric plasticizers having a weight average molecular weight Mw of at least 10.000 g/mol, may advantageously impact the overall shear performance of the first pressure sensitive adhesive, in particular the shear performance at elevated temperature (typically at 70°C). Additionally, polymeric plasticizers having a weight average molecular weight Mw of at least 10.000 g/mol have been found to provide excellent characteristics and performance as to reduction of VOC and FOG levels.

Useful polymeric plasticizers for use herein are typically selected to be miscible with the other components in the composition such as the (co)polymeric material and any optional additives. Suitable polymeric plasticizers for use herein may be easily identified by those skilled, in the light of the present disclosure. Typical examples of polymeric plasticizers that can be used herein include, but are not limited to, those selected from the group consisting of polyisobutylenes, polyisoprenes, polybutadienes, amorphous polyolefins and copolymers thereof, silicones, polyacrylates, oligomeric polyurethanes, ethylene propylene copolymers, any combinations or mixtures thereof..

Advantageously, the polymeric plasticizer(s) for use herein, have a Volatile Organic Compound (VOC) value of less than 1000 ppm, less than 800 ppm, less than 600 ppm, less than 400 ppm or even less than 200 ppm, when measured by thermogravimetric analysis according to the weight loss test method described in the experimental section.

Advantageously still, the polymeric plasticizer(s) for use herein, have a Volatile Fogging Compound (FOG) value of less than 2500 ppm, less than 2000 ppm, less than 1500 ppm, less than 1000 ppm, less than 800 ppm, less than 600 ppm, or even less than 500 ppm, when measured by thermogravimetric analysis according to the weight loss test method described in the experimental section.

Yet advantageously still, the polymeric plasticizer(s) for use herein, have an outgassing value of less than 1 wt%, less than 0.8 wt%, less than 0.6 wt%, less than 0.5 wt%, less than 0.4 wt%, less than 0.3 wt%, less than 0.2 wt% or even less than 0.1 wt%, when measured by weight loss analysis according to the oven outgassing test method described in the experimental section.

According to an advantageous aspect, the polymeric plasticizer has a weight average molecular weight Mw of at least 20.000 g/mol, at least 30.000 g/mol, or even at least 50.000 g/mol. Advantageously still, the polymeric plasticizer has a weight average molecular weight Mw of 100.000 g/mol or less, less than 90.000 g/mol, less than 80.000 g/mol, less than 70.000 g/mol, or even less than 60.000 g/mol.

The weight average molecular weight Mw of the polymeric plasticizer may be determined by any methods known to the skilled person, for example Gel Permeation Chromatography (GPC) also known as Size Exclusion Chromatography (SEC) or by light scattering techniques. Unless otherwise stated, the weight average molecular weight Mw of the polymeric plasticizers is measured by light scattering according to ASTM D4001-13.

In another advantageous aspect of the polymeric foam for use herein, the polymeric plasticizer has a weight average molecular weight Mw comprised between 30.000 g/mol and 80.000 g/mol or even between 30.000 g/mol and 60.000 g/mol.

According to a particularly preferred execution of the polymeric foam for use in the present disclosure, the polymeric plasticizer is a polyisobutylene plasticizer. Typical examples of polyisobutylene plasticizers that can be used herein include, but are not limited to, those selected among those commercially available from BASF under the trade designation OPPANOL, in particular OPPANOL B series.

According to a typical aspect of the polymeric foam, the total amount of the polymeric plasticizers is of no greater than 20 wt%, no greater than 18 wt%, no greater than 15 wt%, or even no greater than 12 wt%, expressed as a percent by weight based on the total weight of the polymeric foam. In some other aspects, the total amount of the polymeric plasticizers is of no less than 6 wt%, or even no less than 7 wt%, expressed as a percent by weight based on the total weight of the polymeric foam. In still some other aspects, the total amount of the polymeric plasticizers is comprised between 2 and 20 wt%, between 4 and 15 wt%, or even between 6 and 15 wt%, expressed as a percent by weight based on the total weight of the polymeric foam.

In some advantageous aspects, the polymeric foam of the present disclosure may optionally comprise a linear block copolymer of the formula L - (G)ₘ, wherein L represents a rubbery block, G represents a glassy block, and m, the number of glassy blocks, is 1 or 2. Suitable rubbery blocks L for use herein comprise a polymerized olefin, a polymerized conjugated diene, a hydrogenated derivative of a polymerized conjugated diene, or any combinations thereof; and wherein m is 1 or 2.

In the context of the present disclosure, it has been surprisingly found that the addition of a linear block copolymer as described above may provide various beneficial effects to the (co)polymeric precursor of the polymeric foam and to the resulting multilayer pressure sensitive adhesive assembly. In particular, the addition of a linear block copolymer as described above may advantageously impact the processability of the (co)polymeric precursor of the polymeric foam due to the viscosity lowering effect of this compound, which in turn results in polymeric foams provided with an improved visual and aesthetic appearance. Also, the presence of a linear block copolymer as described above may additionally provide the resulting polymeric foam with an improved tack performance.

In some aspects, m is one, and the linear block copolymer is a diblock copolymer comprising one rubbery block L and one glassy block G. In some aspects, m is two, and the linear block copolymer comprises two glassy endblocks and one rubbery midblock, i.e., the linear block copolymer is a triblock copolymer.

In some aspects, the rubbery block L comprises a polymerized conjugated diene, a hydrogenated derivative of a polymerized conjugated diene, or any combinations thereof. In some aspects, the conjugated dienes comprise 4 to 12 carbon atoms. Exemplary conjugated dienes include, but are not limited to, butadiene, isoprene, ethylbutadiene, phenylbutadiene, piperylene, pentadiene, hexadiene, ethylhexadiene, and dimethylbutadiene. The polymerized conjugated dienes may be used individually or as copolymers with each other. Preferably, the rubbery block L of the linear block copolymer of the formula L - (G)ₘ comprises a conjugated diene selected from the group consisting of isoprene, butadiene, and any combinations thereof. In some other aspects, the rubbery block L comprises a polymerized olefin, such as e.g. isobutylene.

In some aspects, at least one glassy block G comprises a polymerized monovinyl aromatic monomer. In some other aspects, both glassy blocks of a triblock copolymer comprise a polymerized monovinyl aromatic monomer. In some other aspects, the linear block copolymer of the formula L - (G)ₘ comprises two glassy blocks. According to still another aspect, the monovinyl aromatic monomers comprise 8 to 18 carbon atoms. Exemplary monovinyl aromatic monomers include, but are not limited to, styrene, vinylpyridine, vinyl toluene, alpha-methyl styrene, methyl styrene, dimethylstyrene, ethylstyrene, diethyl styrene, t-butylstyrene, di-n-butylstyrene, isopropylstyrene, other alkylated-styrenes, styrene analogs, and styrene homologs. In some aspects, the monovinyl aromatic monomer is selected from the group consisting of styrene, styrene-compatible monomers or monomer blends, and any combinations thereof.

As used herein, "styrene-compatible monomers or monomer blends" refers to a monomer or blend of monomers, which may be polymerized or copolymerized, that preferentially associate with polystyrene or with the polystyrene endblocks of a block copolymer. The compatibility can arise from actual copolymerization with monomeric styrene; solubility of the compatible monomer or blend, or polymerized monomer or blend in the polystyrene phase during hot melt or solvent processing; or association of the monomer or blend with the styrene-rich phase domain on standing after processing.

In some other aspects, the linear block copolymer of the formula L - (G)ₘ is a diblock copolymer. In some aspects, the diblock copolymer is selected from the group consisting of styrene-isoprene, and styrene-butadiene. In some aspects, the linear block copolymer of the formula L - (G)ₘ is a triblock copolymer. In some aspects, the triblock copolymer is selected from the group consisting of styrene-isoprene-styrene, styrene-butadiene-styrene, styrene-ethylene-butylene-styrene, styrene-ethylene-propylene-styrene, styrene-isobutylene-styrene, and any combinations thereof. Diblock and triblock copolymers are commercially available, e.g., those under the trade name VECTOR available from Dexco Polymer LP, Houston, Texas; and those available under the trade name KRATON available from Kraton Polymers U.S. LLC, Houston, Texas. As manufactured and/or purchased, triblock copolymers may contain some fraction of diblock copolymer as well.

According to a typical aspect of the polymeric foam for use herein, the amount of the optional linear bock copolymer having the formula L - (G)ₘ in the polymeric foam is comprised between 3 wt% and 40 wt%, between 5 wt% and 30 wt%, or even between 10 wt% and 25 wt%, based on the weight of the polymeric foam.

In some aspects, the polymeric foam of the present disclosure may further comprise, as an optional ingredient, a filler material. Such fillers may be advantageously used to e.g. increase the mechanical stability of the polymeric foam and may also increase its shear and peel force resistance.

Any filler material commonly known to those skilled in the art may be used in the context of the present disclosure. Typical examples of filler material that can be used herein include, but are not limited to, those selected from the group consisting of expanded perlite, microspheres, expandable microspheres, ceramic spheres, zeolites, clay fillers, glass beads, hollow inorganic beads, silica type fillers, hydrophobic silica type fillers, hydrophilic silica type fillers, fumed silica, fibers, in particular glass fibers, carbon fibers, graphite fibers, silica fibers, ceramic fibers, electrically and/or thermally conducting particles, nanoparticles, in particular silica nanoparticles, and any combinations thereof.

In a typical aspect of the present disclosure, the polymeric foam comprises a material selected from the group consisting of microspheres, expandable microspheres, preferably pentane filled expandable microspheres, gaseous cavities, glass beads, glass microspheres, glass bubbles and any combinations or mixtures thereof.

When present, the filler material for use herein may be used in the polymeric foam, in any suitable amounts. In some exemplary aspects, the filler material is present in amounts up to 30 parts by weight, up to 25 parts by weight, or even up to 20 parts by weight of the polymeric foam. In some other exemplary aspects, this amount is typically of at least 1 part by weight, or at least 3 parts by weight of the polymeric foam.

Accordingly, in some exemplary aspects, the filler material is present in amounts in a range of from 1 to 20 parts, from 3 to 15 parts by weight, or even from 5 to 13 parts by weight of the polymeric foam. In some other exemplary aspects, the filler material is present in amounts in a range of from 1 to 20 parts, from 2 to 15 parts by weight, or even from 2 to 10 parts by weight of the polymeric foam.

The polymeric foam for use in the present disclosure may further comprise, as an optional ingredient, a crosslinking additive (also referred to as crosslinking agent). A crosslinker may be used to increase the cohesive strength and the tensile strength of the polymeric material. Suitable crosslinking additives for use herein may be easily identified by those skilled in the art, in the light of the present disclosure.

Exemplary crosslinking additives for use herein include crosslinkers having multiple (meth)acryloyl groups. Crosslinkers with multiple (meth)acryloyl groups can be di(meth)acrylates, tri(meth)acrylates, tetra(meth)acrylates, penta(meth)acrylates, and the like.

In many aspects, the crosslinkers contain at least two (meth)acryloyl groups. Exemplary crosslinkers with two acryloyl groups include, but are not limited to, 1,2-ethanediol diacrylate, 1,3-propanediol diacrylate, 1,9-nonanediol diacrylate, 1,12-dodecanediol diacrylate, 1,4-butanediol diacrylate, 1,6-hexanediol diacrylate, butylene glycol diacrylate, bisphenol A diacrylate, diethylene glycol diacrylate, triethylene glycol diacrylate, tetraethylene glycol diacrylate, tripropylene glycol diacrylate, polyethylene glycol diacrylate, polypropylene glycol diacrylate, polyethylene/polypropylene copolymer diacrylate, polybutadiene di(meth)acrylate, propoxylated glycerin tri(meth)acrylate, and neopentylglycol hydroxypivalate diacrylate modified caprolactone.

Exemplary crosslinkers with three or four (meth)acryloyl groups include, but are not limited to, trimethylolpropane triacrylate (e.g., commercially available under the trade designation TMPTA-N from Cytec Industries, Inc., Smyrna, GA and under the trade designation SR-351 from Sartomer, Exton, PA), trimethylolpropane trimethacrylate (e.g., commercially available under the trade designation SR-350 from Sartomer, Exton, PA), pentaerythritol triacrylate (e.g., commercially available under the trade designation SR-444 from Sartomer), tris(2-hydroxyethylisocyanurate) triacrylate (e.g., commercially available under the trade designation SR-368 from Sartomer), a mixture of pentaerythritol triacrylate and pentaerythritol tetraacrylate (e.g., commercially available from Cytec Industries, Inc., under the trade designation PETIA with an approximately 1:1 ratio of tetraacrylate to triacrylate and under the trade designation PETA-K with an approximately 3:1 ratio of tetraacrylate to triacrylate), pentaerythritol tetraacrylate (e.g., commercially available under the trade designation SR-295 from Sartomer), di-trimethylolpropane tetraacrylate (e.g., commercially available under the trade designation SR-355 from Sartomer), and ethoxylated pentaerythritol tetraacrylate (e.g., commercially available under the trade designation SR-494 from Sartomer). An exemplary crosslinker with five (meth)acryloyl groups includes, but is not limited to, dipentaerythritol pentaacrylate (e.g., commercially available under the trade designation SR-399 from Sartomer).

In some aspects, the crosslinkers are polymeric materials that contains at least two (meth)acryloyl groups. For example, the crosslinkers can be poly(alkylene oxides) with at least two acryloyl groups (e.g., polyethylene glycol diacrylates commercially available from Sartomer such as SR210, SR252, and SR603) or poly(urethanes) with at least two (meth)acryloyl groups (e.g., polyurethane diacrylates such as CN9018 from Sartomer). As the higher molecular weight of the crosslinkers increases, the resulting acrylic copolymer tends to have a higher elongation before breaking. Polymeric crosslinkers tend to be used in greater weight percent amounts compared to their non-polymeric counterparts.

In still other methods of crosslinking, thermal crosslinkers may be used, optionally in combination with suitable accelerants and retardants. Suitable thermal crosslinkers for use herein include, but are not limited to, isocyanates, more particularly trimerized isocyanates and/or sterically hindered isocyanates that are free of blocking agents, or else epoxide compounds such as epoxide-amine crosslinker systems. Advantageous crosslinker systems and methods are described e.g. in the descriptions of DE202009013255 U1, EP 2 305 389 A1, EP 2 414 143 A1, EP 2 192 148 A1, EP 2 186 869, EP 0 752 435 A1, EP 1 802 722 A1, EP 1 791 921 A1, EP 1 791 922 A1, EP 1 978 069 A1, and DE 10 2008 059 050 A1. Particularly advantageous crosslinker systems and methods are described in EP 0 752 435 A1 and EP 1 978 069 A1. Suitable accelerants and retardant systems for use herein are described e.g. in the description of US-A1- 2011/028 1964. Suitable thermal crosslinkers for use herein include epoxycyclohexyl derivatives, in particular epoxycyclohexyl carboxylate derivatives, with particular preference to (3,4-epoxycyclohexane)methyl 3,4-epoxycyclohexylcarboxylate, commercially available from Cytec Industries Inc. under tradename UVACURE 1500. According to a particular aspect, the rubber-based elastomeric material for use herein may comprise (co)polymers or copolymers crosslinkable with epoxide groups. Correspondingly, at least part of the monomers or comonomers used may advantageously be functional monomers crosslinkable with epoxide groups. Monomers with acid groups (especially carboxylic, sulphonic or phosphonic acid groups) and/or hydroxyl groups and/or acid anhydride groups and/or epoxide groups and/or amine groups, in particular monomers containing carboxylic acid groups, may be suitably used. Suitable functional monomers are described e.g. in US 2005/0288436 A1.

The crosslinking additive, if present, may be used for example in amounts of up to 40 wt%, based on the weight of the polymeric foam. In some aspects, the crosslinking additive may be used in amounts up to 20 wt%, up to 15 wt%, up to 10 wt%, or up to 5 wt%, based on the weight of the polymeric foam. The amount of crosslinking additive can be for example, in the range of from 0.1 wt% to 10 wt%, from 0.5 wt% to 8 wt%, from 1 wt% to 6 wt%, or even from 2 wt% to 5 wt%, based on the weight of the polymeric foam.

Aside from thermal, moisture or photosensitive crosslinking additives, crosslinking may also be achieved using high energy electromagnetic radiation, such as gamma or e-beam radiation.

In an advantageous aspect of the present disclosure, the crosslinking additive for use herein is activated/activable with actinic radiation, more preferably with e-beam irradiation. In a more preferred aspect, the crosslinking additive is selected from the group of multifunctional (meth)acrylate compounds. Exemplary multifunctional (meth)acrylate compounds preferably comprise at least two (meth)acryloyl groups, in particular three or four (meth)acryloyl groups, more in particular three (meth)acryloyl groups.

In another advantageous aspect, the multifunctional (meth)acrylate compound has the following Formula:

H₂C=C(R¹)-(CO)-O-R²⁻[O-(CO)-(R¹)C=CH_{2]}n

wherein R¹ is hydrogen or methyl; n is 1, 2, 3 or 4; and R² is an alkylene, arylene, heteroalkylene, or any combinations thereof.

According to still another advantageous aspect, the crosslinking additive for use herein is a multifunctional (meth)acrylate compound selected from the group consisting of 1,6-hexanediol di(meth)acrylate, trimethylolpropane tri(meth)acrylate, and any combinations or mixtures thereof.

According to one preferred execution of the multilayer pressure sensitive adhesive assembly according to the present disclosure, the polymeric foam comprises:
a) from 20 wt% to 80 wt%, from 20 wt% to 70 wt%, from 25 wt% to 60 wt%, or even from 25 wt% to 50 wt% of the multi-arm block copolymer, based on the weight of the polymeric foam;
b) from 20 wt% to 70 wt%, from 25 wt% to 60 wt%, or even from 25 wt% to 50 wt% of the hydrocarbon tackifier(s), based on the weight of the polymeric foam;
c) from 2 wt% to 20 wt%, from 4 wt% to 15 wt%, or even from 6 wt% to 15 wt% of the polymeric plasticizer, based on the weight of the polymeric foam;
d) optionally, from 3 wt% to 40 wt%, from 5 wt% to 30 wt%, or even from 10 wt% to 25 wt% of linear block copolymer, based on the weight of the polymeric foam; and
e) optionally, from 0.1 wt% to 10 wt%, from 0.5 wt% to 8 wt%, from 1 wt% to 6 wt%, or even from 2 wt% to 5 wt% of a crosslinking additive, based on the weight of the polymeric foam, and wherein the crosslinking additive is preferably selected from the group of multifunctional (meth)acrylate compounds.

According to the present disclosure, the first pressure sensitive adhesive for use herein comprises:
a) a linear block copolymer having the formula M - (G)ₚ, wherein M is a rubbery block comprising a polymerized olefin, a polymerized conjugated diene, a hydrogenated derivative of a polymerized conjugated diene, or any combinations thereof; and wherein p is 1 or 2;
b) at least one second hydrocarbon tackifier;
c) a (meth)acrylate copolymer having a Tg higher than 25°C and a weight average molecular weight (Mw) comprised between 1000 and 100.000 Daltons, and comprising:
   (i) (meth)acrylic acid ester monomer units having a Tg higher than 25°C when homopolymerized; and
   (ii) optionally, monofunctional ethylenically unsaturated comonomer units;
d) optionally, a multi-arm block copolymer having the formula S_{q}-Z, wherein:
   (i) S represents an arm of the multi-arm block copolymer and each arm independently has the formula G-N,
   (ii) q represents the number of arms and is a whole number of at least 3, and
   (iii) Z is the residue of a multifunctional coupling agent,
   wherein each N is a rubbery block comprising a polymerized conjugated diene, a hydrogenated derivative of a polymerized conjugated diene, or combinations thereof; and
e) optionally, a diblock copolymer having the formula T - (G), wherein T is a rubbery block comprising a polymerized olefin, a polymerized conjugated diene, a hydrogenated derivative of a polymerized conjugated diene, or any combinations thereof.

According to the present disclosure, the first pressure sensitive adhesive for use herein comprises a linear block copolymer of the formula M - (G)ₚ, wherein M represents a rubbery block, G represents a glassy block, and p, the number of glassy blocks, is 1 or 2. Suitable rubbery blocks M for use herein comprise a polymerized olefin, a polymerized conjugated diene, a hydrogenated derivative of a polymerized conjugated diene, or any combinations thereof; and wherein p is 1 or 2.

In some aspects, p is one, and the linear block copolymer of the formula M - (G)ₚ is a diblock copolymer comprising one rubbery block M and one glassy block G. In some aspects, p is two, and the linear block copolymer comprises two glassy endblocks and one rubbery midblock, i.e., the linear block copolymer of the formula M - (G)ₚ is a triblock copolymer.

In some aspects, the rubbery block M comprises a polymerized conjugated diene, a hydrogenated derivative of a polymerized conjugated diene, or any combinations thereof. In some aspects, the conjugated dienes comprise 4 to 12 carbon atoms. Exemplary conjugated dienes include, but are not limited to, butadiene, isoprene, ethylbutadiene, phenylbutadiene, piperylene, pentadiene, hexadiene, ethylhexadiene, and dimethylbutadiene. The polymerized conjugated dienes may be used individually or as copolymers with each other. Preferably, the rubbery block M of the linear block copolymer of the formula M - (G)ₚ comprises a conjugated diene selected from the group consisting of isoprene, butadiene, and any combinations thereof. In some other aspects, the rubbery block M comprises a polymerized olefin, such as e.g. isobutylene.

In some aspects, at least one glassy block G comprises a polymerized monovinyl aromatic monomer. In some other aspects, both glassy blocks of a triblock copolymer comprise a polymerized monovinyl aromatic monomer. In some other aspects, the linear block copolymer of the formula M - (G)ₚ comprises two glassy blocks. According to still another aspect, the monovinyl aromatic monomers comprise 8 to 18 carbon atoms. Exemplary monovinyl aromatic monomers include, but are not limited to, styrene, vinylpyridine, vinyl toluene, alpha-methyl styrene, methyl styrene, dimethylstyrene, ethylstyrene, diethyl styrene, t-butylstyrene, di-n-butylstyrene, isopropylstyrene, other alkylated-styrenes, styrene analogs, and styrene homologs. In some aspects, the monovinyl aromatic monomer is selected from the group consisting of styrene, styrene-compatible monomers or monomer blends, and any combinations thereof.

In some other aspects, the linear block copolymer of the formula M - (G)ₚ is a diblock copolymer. In some aspects, the diblock copolymer is selected from the group consisting of styrene-isoprene, and styrene-butadiene. In some aspects, the linear block copolymer of the formula M - (G)ₚ is a triblock copolymer. In some aspects, the triblock copolymer is selected from the group consisting of styrene-isoprene-styrene, styrene-butadiene-styrene, styrene-ethylene-butylene-styrene, styrene-ethylene-propylene-styrene, styrene-isobutylene-styrene, and any combinations thereof. Diblock and triblock copolymers are commercially available, e.g., those under the trade name VECTOR available from Dexco Polymer LP, Houston, Texas; and those available under the trade name KRATON available from Kraton Polymers U.S. LLC, Houston, Texas. As manufactured and/or purchased, triblock copolymers may contain some fraction of diblock copolymer as well.

According to a typical aspect of the polymeric foam for use herein, the amount of the linear bock copolymer having the formula M - (G)ₚ in the polymeric foam is comprised between 20 wt% and 80 wt%, between 20 wt% and 70 wt%, between 25 wt% and 60 wt%, or even between 25 wt% and 50 wt%, based on the weight of the first pressure sensitive adhesive.

According to the present disclosure, the first pressure sensitive adhesive for use herein further comprises at least one second hydrocarbon tackifier.

The description of the hydrocarbon tackifier(s) for use herein in the polymer foam as detailed above is fully applicable to the second hydrocarbon tackifier for use in the first pressure sensitive adhesive, at the exception that the second hydrocarbon tackifier for use in the first pressure sensitive adhesive does not have to necessarily fulfill the above-detailed VOC requirements or FOG level requirements applicable to the hydrocarbon tackifier(s) for use herein in the polymer foam.

In an advantageous aspect, the second hydrocarbon tackifier is primarily compatible with at least some of the rubbery blocks M and optionally, the rubbery blocks N and T. In some aspects, the hydrocarbon tackifier is primarily compatible with the rubbery blocks M of the linear block copolymer having the formula M - (G)ₚ, with each rubbery block N of a multi-arm block copolymer having the formula S_{q}-Z, and with the rubbery block T of the diblock copolymer having the formula T - (G).

According to an advantageous aspect, the second hydrocarbon tackifier for use in the first pressure sensitive adhesive has a Volatile Organic Compound (VOC) value of less than 1000 ppm, when measured by thermogravimetric analysis according to the weight loss test methods described in the experimental section, wherein the second hydrocarbon tackifier has preferably a Tg of at least 60°C, and wherein preferably the hydrocarbon tackifier is primarily compatible with the rubbery blocks M and optionally, the rubbery blocks N and T.

In the context of the present disclosure, it has been found that the addition of a second hydrocarbon tackifier which is preferably primarily compatible with the rubbery blocks, advantageously impact the adhesion performance (in particular peel performance) in particular on critical substrates, such as e.g. critical paint substrates and critical clear coat systems, in particular automotive critical clear coat systems or critical automotive varnishes.

In a preferred aspect, the second hydrocarbon tackifiers are advantageously selected from the group consisting of coumarone-indene resins, rosin acids, esters of rosin acids, disproportionated rosin acid esters, C9 aromatics, styrene, alpha-methyl styrene, pure monomer resins and C9/C5 aromatic-modified aliphatic hydrocarbons, and blends thereof.

In some aspects of the first pressure sensitive adhesive for use herein, the second hydrocarbon tackifier has a Tg of at least 65°C, or even at least 70°C.

In some aspects of the first pressure sensitive adhesive for use herein, the second hydrocarbon tackifier has a softening point of at least about 115°C, or even at least about 120°C.

According to a typical aspect of the first pressure sensitive adhesive for use in the present disclosure, the ratio of the total weight of all block copolymers to the total weight of all second hydrocarbon tackifiers ranges from 2.4:1 to 1:2.4, from 2.:1 to 1:2., from 1.5:1 to 1:1.5, from 1.2:1 to 1:1.2, from 1.15:1 to 1:1.15, or even from 1.1:1 to 1:1.1.

According to a typical aspect of the first pressure sensitive adhesive, the second hydrocarbon tackifiers may be used for example in amounts of up to 80 wt%, based on the weight of the first pressure sensitive adhesive. In some aspects, the tackifiers can be used in amounts up to 70 wt%, up to 60 wt%, up to 55 wt%, up to 50 wt%, or even up to 45 wt%, based on the weight of the first pressure sensitive adhesive. The amount of tackifiers can be for example, in the range of from 20 wt% to 70 wt%, from 20 wt% to 60 wt%, from 20 wt% to 55 wt%, from 25 wt% to 50 wt%, or even from 25 wt% to 45 wt%, based on the weight of the first pressure sensitive adhesive.

According to the present disclosure, the first pressure sensitive adhesive for use herein further comprises a (meth)acrylate copolymer having a Tg higher than 25°C and a weight average molecular weight (Mw) comprised between 1000 and 100.000 Daltons, and comprising:
(i) (meth)acrylic acid ester monomer units having a Tg higher than 25°C when homopolymerized; and
(ii) optionally, monofunctional ethylenically unsaturated comonomer units;

In the context of the present disclosure, it has been surprisingly found that the addition of a (meth)acrylate copolymer as described above in the composition of the first pressure sensitive adhesive, advantageously improves the adhesion performance of the multilayer pressure sensitive adhesive assembly in particular on critical substrates, such as e.g. critical paint substrates and critical clear coat systems, in particular automotive critical clear coat systems or critical automotive varnishes, as well as on low surface energy plastic plastic substrates such as e.g. TPO, PP or PP/EPDM commonly used in the automotive industry.

More in particular, it has been surprisingly found that the addition of a (meth)acrylate copolymer as described above in the composition of the first pressure sensitive adhesive, advantageously improves the peel adhesion performance of the multilayer pressure sensitive adhesive assembly on critical paint substrates and critical clear coat systems, in particular automotive critical clear coat systems or critical automotive varnishes. It has been no less surprisingly found that the addition of a (meth)acrylate copolymer as described above in the composition of the first pressure sensitive adhesive, beneficially improves the shear adhesion performance of the multilayer pressure sensitive adhesive assembly towards LSE plastic substrates such as e.g. TPO, PP or PP/EPDM.

According to an advantageous aspect of the multilayer pressure sensitive adhesive assembly, the (meth)acrylate copolymer for use herein has a Tg higher than 25°C, higher than 40°C, higher than 50°C, higher than 60°C, or even higher than 70°C.

In the context of the present disclosure, and for determining the Tg of the (meth)acrylate copolymer for use herein, a useful predictor of interpolymer Tg for specific combinations of various monomers can be computed by application of Fox Equation : 1/Tg = ∑Wᵢ/Tgᵢ. In this equation, Tg is the glass transition temperature of the mixture, Wᵢ is the weight fraction of component i in the mixture, and Tgᵢ is the glass transition temperature of component i, and all glass transition temperatures are in Kelvin (K).

In one exemplary aspect of the multilayer pressure sensitive adhesive assembly according to the disclosure, the (meth)acrylate copolymer for use in the composition of the first pressure sensitive adhesive, has a weight average molecular weight (Mw) comprised between 5000 and 80.000 Daltons, between 10.000 and 70.000 Daltons, between 15.000 and 60.000 Daltons, between 20.000 and 50.000 Daltons, or even between 25.000 and 45.000 Daltons. In the context of the present disclosure, the weight average molecular weight of the polymers is determined using conventional gel permeation chromatography (GPC).

In some advantageous aspects, the (meth)acrylate copolymer for use herein comprises (meth)acrylic acid ester monomer units have a Tg higher than 30°C, higher than 40°C, higher than 50°C, higher than 60°C, or even higher than 70°C, when homopolymerized.

According to another advantageous aspect, the (meth)acrylate copolymer for use herein comprises (meth)acrylic acid ester monomer units having a Tg higher than 25°C are selected from the group consisting of C₁-C₃₂ (meth)acrylic acid ester monomer units, C₂-C₂₄ (meth)acrylic acid ester monomer units, or even the C₄-C₁₈ (meth)acrylic acid ester monomer units.

According to still another advantageous aspect, the (meth)acrylate copolymer for use herein comprises (meth)acrylic acid ester monomer units having a Tg higher than 25°C are selected from the group consisting of methyl (meth)acrylate, ethyl (meth)acrylate, isopropyl (meth)acrylate, t-butyl (meth)acrylate, n-butyl (meth)acrylate, isobutyl (meth)acrylate, s-butyl (meth)acrylate, stearyl (meth)acrylate, phenyl (meth)acrylate, cyclohexyl (meth)acrylate, isooctyl (meth)acrylate, 2-ethylhexyl acrylate, isobornyl (meth)acrylate, benzyl (meth)acrylate, 3,3,5 trimethylcyclohexyl (meth)acrylate, cyclohexyl (meth)acrylate, N-octyl acrylamide, propyl (meth)acrylate, and any combinations or mixtures thereof.

In still another advantageous aspect, the (meth)acrylate copolymer for use herein comprises (meth)acrylic acid ester monomer units having a Tg higher than 25°C are selected from the group consisting of isobornyl (meth)acrylate, tert-butyl acrylate, methyl methacrylate, ethyl methacrylate, n-propyl methacrylate, isopropyl methacrylate, n-butyl methacrylate, isobutyl methacrylate, sec-butyl methacrylate, tert-butyl methacrylate, stearyl (meth)acrylate, phenyl (meth)acrylate, cyclohexyl (meth)acrylate, benzyl (meth)acrylate, 3,3,5 trimethylcyclohexyl (meth)acrylate, N-octyl (meth)acrylamide, and any combinations or mixtures thereof.

In yet another advantageous aspect, the (meth)acrylate copolymer for use herein comprises (meth)acrylic acid ester monomer units having a Tg higher than 25°C are selected to be isobornyl acrylate.

According to a typical aspect, the (meth)acrylate copolymer for use herein comprises optional monofunctional ethylenically unsaturated comonomer units selected from the group consisting of acrylic acid, methacrylic acid, itaconic acid, hydroxyalkyl acrylates, acrylamides and substituted acrylamides, acrylamines and substituted acrylamines, and any combinations or mixtures thereof.

According to another typical aspect, the (meth)acrylate copolymer for use herein comprises optional monofunctional ethylenically unsaturated comonomer units selected from the group consisting of acrylic acid, methacrylic acid, 2-carboxyethyl acrylate, N,N' dimethyl acrylamide, N,N' diethyl acrylamide, butyl carbamoyl ethyl acrylate, and any combinations or mixtures thereof.

According to still another typical aspect, the (meth)acrylate copolymer for use herein comprises optional monofunctional ethylenically unsaturated comonomer units selected from the group consisting of acid-functional ethylenically unsaturated comonomer units. Preferably, the (meth)acrylate copolymer for use herein comprises optional monofunctional ethylenically unsaturated comonomer units selected to be acrylic acid.

According to a preferred execution of the multilayer pressure sensitive adhesive assembly according to the disclosure, the (meth)acrylate copolymer for use herein comprises:
a) from 85 to 99.9 weight percent, from 90 to 99.5 weight percent, from 92 to 99 weight percent, from 94 to 98 weight percent, or even from 95 to 98 weight percent, of (meth)acrylic acid ester monomer units having a Tg higher than 25°C, wherein the (meth)acrylic acid ester monomer units are preferably selected from the group consisting of isobornyl (meth)acrylate, tert-butyl acrylate, methyl methacrylate, ethyl methacrylate, n-propyl methacrylate, isopropyl methacrylate, n-butyl methacrylate, isobutyl methacrylate, sec-butyl methacrylate, tert-butyl methacrylate, stearyl (meth)acrylate, phenyl (meth)acrylate, cyclohexyl (meth)acrylate, benzyl (meth)acrylate, 3,3,5 trimethylcyclohexyl (meth)acrylate, N-octyl (meth)acrylamide, and any combinations or mixtures thereof; and
b) optionally, from 0.1 to 15 weight percent, from 0.5 to 10 weight percent, from 1.0 to 8 weight percent, from 2.0 to 6.0 weight percent, or even from 2.0 to 5.0 weight percent of monofunctional ethylenically unsaturated comonomer units, preferably acid-functional monomer ethylenically unsaturated comonomer units, more preferably acrylic acid monomer units;
wherein the weight percentages are based on the total weight of the (meth)acrylate copolymer.

According to a typical aspect of the first pressure sensitive adhesive, the amount of the (meth)acrylate copolymer in the first pressure sensitive adhesive is comprised between 3 wt% and 25 wt%, between 4 wt% and 20 wt%, between 5 wt% and 18 wt%, or even between 6 wt% and 15 wt%, based on the weight of the first pressure sensitive adhesive.

The (meth)acrylate copolymer for use herein in the first pressure sensitive adhesive may be prepared by any conventional free radical polymerization method, commonly known to those skilled in the art. Exemplary methods include solution, radiation, bulk, dispersion, emulsion, solventless, and suspension processes. The resulting (meth)acrylate (co)polymers may be random or block (co)polymers.

In a preferred aspect, the (meth)acrylate copolymer for use herein is prepared by solventless processes. Solventless polymerization methods, such as the continuous free radical polymerization method described in U.S. Pat. Nos. 4,619,979 and 4,843,134 (Kotnour et al.); the essentially adiabatic polymerization methods using a batch reactor described in U.S. Pat. No. 5,637,646 (Ellis); and, the methods described for polymerizing packaged pre-adhesive compositions described in U.S. Pat. Nos. 5,804,610 and 6,928,794 (Hamer et al.), may also be utilized to prepare the polymers. Alternatively, the (meth)acrylate copolymer for use herein may be prepared by a polymerization method involving solvent recovery as described in EP-A1-1484342 (Husemann et al.).

In some advantageous aspects, the first pressure sensitive adhesive of the present disclosure may optionally comprise a multi-arm block copolymer having the formula S_{q}-Z, wherein S represents an arm of the multi-arm block copolymer and each arm independently has the formula G-N, q represents the number of arms and is a whole number of at least 3, and Z is the residue of a multifunctional coupling agent; and wherein each N is a rubbery block comprising a polymerized conjugated diene, a hydrogenated derivative of a polymerized conjugated diene, or combinations thereof.

In the context of the present disclosure, it has been surprisingly found that the addition of a multi-arm block copolymer as described above in the composition of the first pressure sensitive adhesive, advantageously improves the adhesion performance of the multilayer pressure sensitive adhesive assembly on critical substrates, in particular the high temperature shear adhesion performance of the multilayer pressure sensitive adhesive assembly.

In a particular aspect of the present disclosure, the multi-arm styrenic block copolymer having the formula S_{q}-Z for use herein is such that q ranges from 3 to 10 or even from 3 to 5. In some other aspects, q is 4, while in some other executions, q is equal to 6 or more.

Suitable rubbery blocks N for use herein comprise polymerized conjugated dienes, hydrogenated derivatives of a polymerized conjugated diene, or combinations thereof. In some typical aspects, the rubbery block N of at least one arm comprises a polymerized conjugated diene selected from the group consisting of isoprene, butadiene, ethylene butadiene copolymers, hydrogenated derivatives of polyisoprene or polybutadiene, and any combinations or mixtures thereof. According to an advantageous aspect, the rubbery blocks N of each arm comprise a polymerized conjugated diene selected from the group consisting of isoprene, butadiene, ethylene butadiene copolymers, hydrogenated derivatives of polyisoprene or polybutadiene, and combinations or mixtures thereof.

According to a preferred aspect of the multilayer pressure sensitive adhesive assembly according to the present disclosure, at least one of the rubbery blocks N of the multi-arm block copolymer having the formula S_{q}-Z comprises a conjugated diene selected from the group consisting of isoprene, butadiene, and any combinations thereof. More preferably, each of the rubbery blocks N of the multi-arm block copolymer having the formula S_{q}-Z comprises a conjugated diene selected from the group consisting of isoprene, butadiene, and any combinations thereof.

According to a particularly advantageous aspect of the multilayer pressure sensitive adhesive assembly according to the present disclosure, at least one arm of the multi-arm block copolymer having the formula S_{q}-Z is selected from the group consisting of styrene-isoprene-styrene, styrene-butadiene-styrene, styrene-ethylene-butylene-styrene, styrene-ethylene-propylene-styrene, and combinations thereof. More preferably, each arm of the multi-arm block copolymer having the formula S_{q}-Z is selected from the group consisting of styrene-isoprene-styrene, styrene-butadiene-styrene, styrene-ethylene-butylene-styrene, styrene-ethylene-propylene-styrene, and any combinations thereof. Even more preferably, each arm of the multi-arm block copolymer having the formula S_{q}-Z is selected from the group consisting of styrene-isoprene-styrene, styrene-butadiene-styrene, and any combinations thereof.

Suitable glassy blocks G for use in the multi-arm block copolymer having the formula S_{q}-Z herein comprise a polymerized monovinyl aromatic monomer. In some typical aspects, the glassy block G of at least one arm comprises a monovinyl aromatic monomer selected from the group consisting of styrene, styrene-compatible blends, and any combinations thereof. According to an advantageous aspect, the glassy blocks G of each arm comprise a monovinyl aromatic monomer selected from the group consisting of styrene, styrene-compatible blends, and any combinations thereof.

According to an advantageous execution of the present disclosure, the multi-arm block copolymer having the formula S_{q}-Z for use herein is a (multi-arm) star block copolymer. In a more advantageous aspect of the multilayer pressure sensitive adhesive assembly according to the present disclosure, the multi-arm block copolymer having the formula S_{q}-Z is a polymodal block copolymer. As used herein, the term "polymodal" means that the copolymer comprises endblocks having at least two different molecular weights. Such a block copolymer may also be characterized as having at least one "high" molecular weight endblock, and at least one "low" molecular weight endblock, wherein the terms high and low are used relative to each other. In some particular aspects, the ratio of the number average molecular weight of the high molecular weight endblock, (Mn)H, relative to the number average molecular weight of the low molecular weight endblock,(Mn)L, is at least about 1.25.

In some particular aspects, (Mn)H ranges from about 5000 to about 50000. In some embodiments, (Mn)H is at least about 8000, and in some aspects at least about 10000. In some aspects, (Mn)H is no greater than about 35000. In some aspects, (Mn)L ranges from about 1000 to about 10000. In some aspects, (Mn)L is at least about 2000, and, in some aspects, at least about 4000. In some aspects, (Mn)L is less than about 9000, and, in some aspects, less than about 8000.

According to another beneficial aspect, the multi-arm block copolymer having the formula S_{q}-Z is an asymmetric block copolymer. In some aspects, the multi-arm block copolymers of the present disclosure are polymodal, asymmetric block copolymers.

The multifunctional coupling agent Z for use in the multi-arm block copolymer having the formula S_{q}-Z, is as described above for the multifunctional coupling agent Y for use in the multi-arm block copolymer having the formula Qₙ-Y.

According to a typical aspect, the multi-arm block copolymer having the formula S_{q}-Z as described above is used for example in amounts of up to 20 wt%, based on the weight of the first pressure sensitive adhesive. In some exemplary aspects, the amount of multi-arm block copolymer having the formula S_{q}-Z can be for example, in the range of from 1 wt% to 15 wt%, from 2 wt% to 13 wt%, from 2 wt% to 10 wt%, or even from 3 wt% to 10 wt%, based on the weight of the first pressure sensitive adhesive.

In some advantageous aspects, the first pressure sensitive adhesive of the present disclosure may optionally comprise a diblock copolymer having the formula T - (G), wherein T is a rubbery block comprising a polymerized olefin, a polymerized conjugated diene, a hydrogenated derivative of a polymerized conjugated diene, or any combinations thereof.

In the context of the present disclosure, it has been surprisingly found that the addition of a diblock copolymer as described above may provide various beneficial effects to the (co)polymeric precursor of the first pressure sensitive adhesive and to the resulting multilayer pressure sensitive adhesive assembly. In particular, the addition of a diblock copolymer as described above may advantageously impact the processability of the (co)polymeric precursor of the first pressure sensitive adhesive due to the viscosity lowering effect (rheology modifier) of this compound, which in turn results in first pressure sensitive adhesives provided with an improved visual and aesthetic appearance. Furthermore, it has been surprisingly found that the diblock copolymer as described above, when present in the first pressure sensitive adhesive, does not unwantedly migrate into other layers of the multilayer pressure sensitive adhesive assembly according to the present disclosure, whilst still providing a plasticizing effect to the (co)polymeric precursor of the first pressure sensitive adhesive.

According to a particular aspect, the rubbery block T of the diblock copolymer having the formula T - (G) comprises an olefin selected to be isobutylene or a conjugated diene selected from the group consisting of isoprene, butadiene, and any combinations thereof.

According to another particular aspect, the rubbery block T of the diblock copolymer having the formula T - (G) comprises a conjugated diene selected from the group consisting of isoprene, butadiene, and any combinations thereof.

In still another aspect, the diblock copolymer having the formula T - (G) is selected from the group consisting of styrene-isoprene, styrene-butadiene, and any combinations thereof. Preferably, the diblock copolymer having the formula T - (G) is selected to be styrene-butadiene.

According to a typical aspect, the amount of the optional diblock copolymer having the formula T - (G) in the first pressure sensitive adhesive is comprised between 1 wt% and 20 wt%, between 2 wt% and 15 wt%, between 4 wt% and 12 wt%, or even between 5 wt% and 10 wt%, based on the weight of the first pressure sensitive adhesive.

In some aspects, the first pressure sensitive adhesive of the present disclosure may further comprise, as an optional ingredient, a filler material. Filler materials for use in the first pressure sensitive adhesive are as described above for use in the polymeric foam.

In a typical aspect of the present disclosure, the first pressure sensitive adhesive is free of any filler material selected from the group consisting of microspheres, expandable microspheres, preferably pentane filled expandable microspheres, gaseous cavities, glass beads, glass microspheres, glass bubbles and any combinations or mixtures thereof. More typically, the first pressure sensitive adhesive is free of any filler material selected from the group consisting of expandable microspheres, glass bubbles, and any combinations or mixtures thereof.

According to one preferred execution of the multilayer pressure sensitive adhesive assembly according to the disclosure, the first pressure sensitive adhesive comprises:
a) from 20 wt% to 80 wt%, from 20 wt% to 70 wt%, from 25 wt% to 60 wt%, or even from 25 wt% to 50 wt% of a linear block copolymer having the formula M - (G)ₚ, based on the weight of the first pressure sensitive adhesive; and
b) from 20 wt% to 70 wt%, from 20 wt% to 60 wt%, from 20 wt% to 55 wt%, from 25 wt% to 50 wt% or even from 25 wt% to 45 wt% of the second hydrocarbon tackifier(s), based on the weight of the first pressure sensitive adhesive;
c) from 3 wt% to 25 wt%, from 4 wt% to 20 wt%, from 5 wt% to 18 wt%, or even from 6 wt% to 15 wt% of the (meth)acrylate copolymer, based on the weight of the first pressure sensitive adhesive;
d) from 1 wt% to 15 wt%, from 2 wt% to 13 wt%, from 2 wt% to 10 wt%, or even from 3 wt% to 10 wt% of the optional multi-arm block copolymer having the formula S_{q}-Z, based on the weight of the first pressure sensitive adhesive;
e) from 1 wt% to 20 wt%, from 2 wt% to 15 wt%, from 4 wt% to 12 wt%, or even from 5 wt% to 10 wt% of the optional diblock copolymer having the formula T - (G), based on the weight of the first pressure sensitive adhesive; and
f) optionally, from 0.1 wt% to 10 wt%, from 0.5 wt% to 8 wt%, from 1 wt% to 6 wt%, or even from 2 wt% to 5 wt% of a crosslinking additive, based on the weight of the first pressure sensitive adhesive foam, and wherein the crosslinking additive is preferably selected from the group of multifunctional (meth)acrylate compounds.

In a particularly advantageous aspect, the multilayer pressure sensitive adhesive assembly according to the present disclosure is obtained by melt co-extrusion, in particular hotmelt co-extrusion of the polymeric foam layer and the first pressure sensitive adhesive layer.

In the context of the present disclosure, it has been surprisingly found that a multilayer pressure sensitive adhesive assembly as described above, and which is obtained by melt co-extrusion, in particular hotmelt co-extrusion of the polymeric foam layer and the first pressure sensitive adhesive layer provides outstanding robustness, as well as excellent resistance to delamination, even at high temperatures such as e.g. 70°C and even higher. Furthermore, it has been surprisingly found that a multilayer pressure sensitive adhesive assembly as described above, and which is obtained by melt co-extrusion, in particular hotmelt co-extrusion of the polymeric foam layer and the first pressure sensitive adhesive layer, is less subjected to unwanted migration of compounds (in particular processing aid or plasticizer) through the layers of the multilayer pressure sensitive adhesive assembly according to the present disclosure, primarily because the use of processing aids per se is unnecessary when melt co-extrusion process is performed.

Melt co-extrusion, in particular hotmelt co-extrusion is a technique well known to those skilled in the art. Exemplary hotmelt co-extrusion processes are described e.g. in US 2003/0082362 A1 (Khandpur et al.), in US 2004/0082700 A1 (Khandpur et al. ).

Hotmelt co-extrusion process typically involves forming a hotmelt composition, generally a polymer or blended polymeric material with a melt viscosity profile such that it can be extrusion coated on a substrate or carrier in a thin layer at a process temperature significantly above normal room temperature, but retains useful pressure-sensitive adhesive characteristics at room temperature.

A multilayer pressure sensitive adhesive assembly of the present disclosure may preferably be manufactured by hotmelt co-extrusion of the polymeric foam layer, the first pressure sensitive adhesive layer, and optionally, the second pressure sensitive adhesive layer. Exemplary processes typically involve compounding the various ingredients of each layer to a hotmelt compound (such as e.g. block copolymers, polymeric plasticizers, (meth)acrylate copolymers, and hydrocarbon tackifiers). As well known in the art, compounding is typically performed in roll milling or in an extruder (such as e.g., single. screw, twin screw, planetary extruder, ring extruder, disk screw, reciprocating single screw, pin barrel single screw, etc.). Commercially available equipment such as kneaders or mixers may also be used to compound batches of the adhesive compositions. After compounding, the various prepared compositions are coextruded through a coextrusion die into a desired multilayer assembly. The processing of the multilayer extrudate is continued through a calendar or another type of coating equipment, Because of the tacky behavior of the adhesive it is coated on a liner and the rolls are coated with materials which do not stick to the extruded adhesive.

In another particularly advantageous aspect, the multilayer pressure sensitive adhesive assembly according to the present disclosure is crosslinked, preferably with actinic radiation, more preferably with e-beam irradiation. According to one preferred aspect, the multilayer pressure sensitive adhesive assembly is crosslinked with e-beam irradiation, wherein the e-beam irradiation dose is preferably comprised between 50 kGy and 150 kGy. In a further particular aspect, the e-beam irradiation is performed from both sides so as to achieve a symmetric irradiation profile within the multilayer pressure sensitive adhesive assembly.

The step of crosslinking the multilayer pressure sensitive adhesive assembly as described above, in particular with actinic radiation, and preferably with e-beam irradiation, provides a multilayer pressure sensitive adhesive assembly characterized with excellent static shear performance both at room temperature and high temperature (e.g. 70°C).

While performing e-beam irradiation based crosslinking, finding suitable e-beam irradiation dose in conjunction with selecting suitable e-beam acceleration tension will be well within the practice of those skilled in the art. Suitable acceleration tensions are typically selected and adapted to the coating weight of the corresponding multilayer pressure sensitive adhesive assembly. Exemplary e-beam acceleration voltages are typically comprised between 140 and 300 kV for pressure sensitive adhesive layers with a coating weight between 25 and 1200g/m². When irradiated from both sides, the pressure sensitive adhesive layers may have a coating weight up to 1800g/m².

Advantageously, the multilayer pressure sensitive adhesive assembly of the present disclosure may be crosslinked using an e-beam irradiation dose comprised between 50 kGy and 150 kGy.

The multilayer pressure sensitive adhesive assembly of the present disclosure comprises a polymeric foam layer and a first pressure sensitive adhesive layer, as described above, adjacent to the polymeric foam layer. However, the multilayer pressure sensitive adhesive assembly according to the present disclosure may have a design or configuration of any suitable kind, depending on its ultimate application and the desired properties, and provided it comprises a first pressure sensitive adhesive layer as described above and a polymeric foam layer.

According to an exemplary aspect, the multilayer pressure sensitive adhesive assembly of the present disclosure may take the form of a multilayer construction comprising two or more superimposed layers, i.e. the first pressure sensitive adhesive layer, the polymeric foam layer and optionally, adjacent layers such as e.g. further pressure sensitive adhesive layers and/or a backing layer. Such adhesive multilayer constructions or tapes may be advantageously used as a dual-layer adhesive tape to adhere two objects to one another. In that context, suitable polymeric foam layers or backing layers for use herein may or may not exhibit at least partial pressure sensitive adhesive characteristics.

Accordingly, in one particular aspect, the multilayer pressure sensitive adhesive assembly according to the present disclosure comprises a polymeric foam having a first major surface and a second major surface; and a first pressure sensitive adhesive layer as described above bonded to the first major surface of the polymeric foam layer.

According to an advantageous aspect of the multilayer pressure sensitive adhesive assembly, the first pressure sensitive adhesive layer for use herein has a thickness of less than 1500 µm, less than 1000 µm, less than 800 µm, less than 600 µm, less than 400 µm, less than 200 µm, less than 150 µm, or even less than 100 µm. Advantageously still, the first pressure sensitive adhesive layer for use herein has a thickness comprised between 20 and 1500 µm, between 20 and 1000 µm, between 20 and 500 µm, between 30 and 400 µm, between 30 and 250 µm, between 40 and 200 µm, or even between 50 and 150 µm.

According to a typical aspect of the multilayer pressure sensitive adhesive assembly, the polymeric foam layer for use herein has for example a thickness comprised between 100 and 6000 µm, between 200 and 4000 µm, between 400 and 3000 µm, between 500 and 2000 µm, or even between 800 and 1500 µm. As will be apparent to those skilled in the art, in the light of the present description, the preferred thickness of the polymeric foam layer will be dependent on the intended application.

The thickness of the various pressure sensitive adhesive layer(s) and other optional layer(s) comprised in the pressure sensitive adhesive assembly may vary in wide ranges depending on the desired execution and associated properties. By way of example, the thickness can be independently chosen for each layer between 25 µm and 6000 µm, between 40 µm and 3000 µm, between 50 µm and 3000 µm, between 50 µm and 2000 µm, or even between 50 µm and 1500 µm.

According to the particular execution wherein the multilayer pressure sensitive adhesive assembly takes the form of skin/core type multilayer pressure sensitive adhesive assembly, wherein the polymeric foam layer is the core layer of the multilayer pressure sensitive adhesive assembly and the first pressure sensitive adhesive layer is the skin layer of the multilayer pressure sensitive adhesive assembly, it is preferred that the first pressure sensitive adhesive layer has a lower thickness compared to the polymeric foam /core layer.

As a way of example, the thickness of the pressure sensitive adhesive layer may typically be in the range from 20 µm to 250 µm, or even from 40 µm to 200 µm, whereas the thickness of the polymeric foam layer may typically be in the range from 100 µm to 6000 µm, from 400 µm to 3000 µm, or even from 800 µm to 2000 µm. Such multilayer pressure sensitive adhesive assemblies typically exhibit high peel adhesion. Without wishing to be bound by theory, it is believed such high peel adhesion is caused by a stabilizing effect of the relatively thick polymeric foam layer compared to the first pressure sensitive adhesive layer.

In some other executions, the multilayer pressure sensitive adhesive assembly further comprises a second pressure sensitive adhesive skin layer bonded to the second major surface of the polymeric foam layer, and wherein the multilayer pressure sensitive adhesive assembly is preferably obtained by hotmelt co-extrusion of the polymeric foam layer, the first pressure sensitive adhesive layer and the second pressure sensitive adhesive layer. Such a multilayer pressure sensitive adhesive assembly reflects a three-layer design, in which the polymeric foam layer is sandwiched between e.g. two pressure sensitive adhesive layers. In some aspects of the multilayer pressure sensitive adhesive assembly, the first pressure sensitive adhesive layer and the second pressure sensitive adhesive layer are the same adhesive, and comprise a pressure sensitive adhesive composition as described above. In some alternative aspects, the first pressure sensitive adhesive layer and the second pressure sensitive adhesive layer each independently comprise a pressure sensitive adhesive composition as described above.

In some executions, the multilayer pressure sensitive adhesive assembly according to the present disclosure may advantageously be in the form of a skin/core/skin multilayer assembly, wherein the polymeric foam layer is the core layer of the multilayer pressure sensitive adhesive assembly, and the skin layers are the first pressure sensitive adhesive layer and the second pressure sensitive adhesive layer.

The multilayer pressure sensitive adhesive assembly of the present disclosure comprises a polymeric foam layer adjacent to the first pressure sensitive adhesive layer.

In the context of the present disclosure, the term "polymeric foam" is meant to designate a material based on a polymer and which material comprises voids, typically in an amount of at least 5% by volume, typically from 10% to 80% by volume or from 10% to 65% by volume. The voids may be obtained by any of the known methods such as cells formed by gas. Alternatively, the voids may result from the incorporation of hollow fillers, such as hollow polymeric particles, hollow glass microspheres, hollow ceramic microspheres. According to another alternative aspect, the voids may result from the incorporation of heat expandable microspheres, preferably pentane filled expandable microspheres. The heat expandable microspheres for use herein may be expanded when the polymer melt passes an extrusion die. Polymer mixtures containing expandable microspheres may also be extruded at temperatures below their expansion temperature and expanded in a later step by exposing the tape to temperatures above the expansion temperature of the microspheres. Alternatively, the voids can result from the decomposition of chemical blowing agents.

A polymeric foam layer typically has a density comprised between 0.30 g/cm³ and 1.5 g/cm³, between 0.35 g/cm³ and 1.10 g/cm³, or even between 0.40 g/cm³ and 0.95 g/cm³. This density is achieved by including voids or cells. Typically, the polymeric foam layer will comprise at least 5% of voids by volume and for example between 15 and 45 %, or between 20% and 45% by volume.

The voids or cells in the polymeric foam layer can be created in any of the known manners described in the art and include the use of a gas or blowing agent and/or incorporation of hollow fillers, such as hollow polymeric particles, hollow glass microspheres, hollow ceramic microspheres or expandable microspheres, preferably pentane filled expandable microspheres, into the composition for the polymeric foam layer.

Multilayer pressure sensitive adhesive assemblies comprising a polymeric foam layer, are particularly advantageous when compared to single-layer pressure sensitive adhesives, in that adhesion (quick adhesion) can be adjusted by the formulation of the pressure sensitive adhesive layer(s) (also commonly referred to as the skin layer(s)), while other properties/requirements of the overall assembly such as application issues, deforming issues and energy distribution may be addressed by appropriate formulation of the polymeric foam layer (also commonly referred to as the core layer).

In one particular aspect of the multilayer pressure sensitive adhesive assembly according to the present disclosure, the second pressure sensitive adhesive layer has a composition identical to the first pressure sensitive adhesive as described above.

In some particular aspects of the multilayer pressure sensitive adhesive assembly according to the disclosure, a primer layer may be interposed between the pressure sensitive adhesive layer(s) and the polymeric foam (or core) layer. In the context of the present disclosure, any primer compositions commonly known to those skilled in the art may be used. Finding appropriate primer compositions is well within the capabilities of those skilled in the art, in the light of the present disclosure. Useful primers for use herein are described e.g. in U.S. Patent No. 5,677,376 (Groves) and U.S. Patent No. 5,605,964 (Groves).

According to a particularly advantageous aspect, the multilayer pressure sensitive adhesive assembly as described above, has a Volatile Organic Compound (VOC) value of less than 1500 ppm, less than 1200 ppm, less than 1000 ppm, less than 800 ppm, less than 600 ppm, or even less than 500 ppm, when measured by thermal desorption analysis according to test method VDA278 (Thermal Desorption Analysis of Organic Emissions for the Characterization of Non-Metallic Materials for Automobiles) from VDA, Association of the German Automobile Industry.

Advantageously still, the multilayer pressure sensitive adhesive assembly has a Volatile Fogging Compound (FOG) value of less than 4000 ppm, less than 3000 ppm, less than 2500 ppm, less than 2000 ppm, less than 1500 ppm, less than 1000 ppm, less than 800 ppm, less than 600 ppm, less than 500 ppm, or even less than 400 ppm, when measured by thermal desorption analysis according to test method VDA278.

According to another advantageous execution, the multilayer pressure sensitive adhesive assembly has a static shear strength value of more than 300 min, more than 500 min, more than 1000 min, more than 2000 min, more than 4000 min, more than 5000 min, more than 6000 min, more than 8000 min, or even more than 10000 min, when measured at 70°C according to the static shear test method described in the experimental section.

According to still another advantageous execution, the multilayer pressure sensitive adhesive assembly as described above has a peel strength value of more than 30 N/10 mm, more than 40 N/10 mm, more than 50 N/10 mm, more than 60 N/10 mm, more than 70 N/10 mm, or even more than 80 N/10 mm, when measured at 23°C according to the peel test method described in the experimental section.

In another aspect of the present disclosure, it is provided a method of manufacturing a multilayer pressure sensitive adhesive assembly as described above, which comprises the step of melt co-extruding, in particular hotmelt co-extruding the polymeric foam layer, the first pressure sensitive adhesive layer, and optionally, the second pressure sensitive adhesive layer.

In a more particular aspect, the present disclosure is directed to a method of manufacturing a multilayer pressure sensitive adhesive assembly as described above, which comprises the steps of:
a) compounding the multi-arm block copolymer having the formula Qₙ-Y, the polymeric plasticizer, at least one hydrocarbon tackifier; optionally, the linear block copolymer having the formula L - (G)ₘ, optionally, a crosslinking agent which is preferably selected from the group of multifunctional (meth)acrylate compounds; and wherein the hydrocarbon tackifier(s) have a Volatile Organic Compound (VOC) value of less than 1000 ppm, less than 800 ppm, less than 600 ppm, less than 400 ppm or even less than 200 ppm, when measured by thermogravimetric analysis according to the weight loss test methods described in the experimental section; thereby forming a hotmelt compound of the polymeric foam layer;
b) compounding the linear block copolymer having the formula M - (G)ₚ, at least one second hydrocarbon tackifier, the (meth)acrylate copolymer having a Tg higher than 25°C and a weight average molecular weight (M_{w}) comprised between 1000 and 100.000 Daltons; optionally, the multi-arm block copolymer having the formula S_{q}-Z; optionally, the diblock copolymer having the formula T - (G); thereby forming a hotmelt compound of the first pressure sensitive adhesive layer;
c) optionally, providing a hotmelt compound of the second pressure sensitive adhesive layer;
d) hotmelt co-extruding the polymeric foam layer, the first pressure sensitive adhesive layer, and optionally, the second pressure sensitive adhesive layer thereby forming a hotmelt co-extruded multilayer pressure sensitive adhesive assembly; and
e) optionally, crosslinking the hotmelt co-extruded multilayer pressure sensitive adhesive assembly obtained in step d), preferably with actinic radiation, more preferably with e-beam irradiation.

According to one exemplary aspect method of manufacturing a multilayer pressure sensitive adhesive assembly, the hotmelt of the polymeric foam layer comprises a filler material selected from the group consisting of expandable microspheres, expanded microspheres, glass bubbles, any combinations or mixtures thereof. According to this particular execution, the method of manufacturing a multilayer pressure sensitive adhesive assembly may optionally comprise the step of allowing the expandable microspheres to expand or further expand.

In a particular aspect, the method of manufacturing a multilayer pressure sensitive adhesive assembly comprises an extrusion processing step selected from the group consisting of multi screw extrusion processing steps, planetary extrusion processing steps, and any combinations thereof. According to an advantageous aspect, the method of manufacturing a multilayer pressure sensitive adhesive assembly comprises a twin screw hotmelt extrusion processing step.

According to an advantageous aspect of the method of manufacturing a multilayer pressure sensitive adhesive assembly, the hydrocarbon tackifier(s) and/or the polymeric plasticizer(s), are exposed to minimal heat stress prior to their feeding into the compounding medium. In the context of the present disclosure, it has been indeed found that heat stress at elevated temperatures applied to the hydrocarbon tackifier(s) and/or the polymeric plasticizer(s), for a long period of time may lead to an accelerated thermal and/or oxidative degradation of these ingredients and to the generation of VOCs.

Accordingly, in a preferred aspect of the method of manufacturing a multilayer pressure sensitive adhesive assembly, the hydrocarbon tackifier(s) and the polymeric plasticizer(s), are added into the compounding medium with a drum unloader as feeding equipment.

Alternatively, the hydrocarbon tackifier(s) and/or the polymeric plasticizer(s), are fed into the compounding medium with a single screw feeding extruder. Alternatively still, the hydrocarbon tackifier(s) and/or the polymeric plasticizer(s), are fed to the compounding medium with a kneading equipment having a discharge screw.

According to another advantageous aspect of the method of manufacturing a multilayer pressure sensitive adhesive assembly, the hydrocarbon tackifier(s) and/or the polymeric plasticizer(s) are added into the compounding medium in a solid state by means of volumetric or gravimetric feeders.

In some particular aspects, the method of manufacturing a multilayer pressure sensitive adhesive assembly comprises the step of applying a vacuum degassing operation, preferably a multi-stage vacuum degassing operation, of at least one of the hotmelt compound(s). Vacuum may be typically applied to the compounded adhesive melt during the extrusion process. Vacuum can indifferently be applied to the skin compound melt and/or to the core compound melt prior to adding the foaming agent.

According to another exemplary aspect, the method of manufacturing a multilayer pressure sensitive adhesive assembly comprises the step of incorporating a volatile organic compound (VOC) entraining additive, preferably into at least one of the hotmelt compound(s), wherein the entraining additive is advantageously selected from the group

According to an exemplary aspect of the method of manufacturing a multilayer pressure sensitive adhesive assembly, a chemical entrainer is added to the compounded adhesive melt and removed later in the extrusion process. Suitable entrainers for use herein are liquids, gases or compounds that release a volatile chemical substance under the action of heat. Advantageously, the used entrainer is capable of entraining further volatiles or last traces of volatiles. Suitable entrainers can be added to the skin PSA melt and or to the core melt and removed later in the extrusion process. In case the entrainer is added to the core compound, the latter is preferably removed before adding the foaming agent. consisting of water, carbon dioxide, nitrogen gas, and any combinations thereof. One particularly suitable entraining additive for use herein is described in EP2808371-A1 (Buettner et al.), the content of which is herewith incorporated by reference.

In another particular aspect, the method of manufacturing a multilayer pressure sensitive adhesive assembly comprises the step of crosslinking the hotmelt co-extruded multilayer pressure sensitive adhesive assembly obtained in step d) with actinic radiation, preferably with e-beam irradiation. In a particular aspect, the actinic radiation crosslinking step is applied under any of closed face (CF) or open face (OF) conditions.

According to the "closed face" irradiation method, one or both faces of the hotmelt co-extruded multilayer pressure sensitive adhesive assembly obtained in step d) are covered with a liner and the irradiation dose is applied through the liner(s).

According to the "open face" irradiation method, one or both faces of the hotmelt co-extruded multilayer pressure sensitive adhesive assembly obtained in step d) are exposed (i.e. not covered with a liner) and the irradiation dose is applied directly on the exposed adhesive surface(s).

Typically, the hotmelt co-extruded multilayer pressure sensitive adhesive assembly is deposited on a substrate and then post cured, preferably with actinic radiation, more preferably with e-beam radiation.

In the context of manufacturing a multilayer pressure sensitive adhesive assembly, the various layers of the multilayer pressure sensitive adhesive assembly are prepared as part of a single process step.

The multilayer pressure sensitive adhesive assembly of the present disclosure can be coated/applied upon a variety of substrates to produce adhesive-coated articles. The substrates can be flexible or inflexible and be formed of a polymeric material, paper, glass or ceramic material, metal, or combinations thereof. Suitable polymeric substrates include, but are not limited to, polymeric films such as those prepared from polypropylene, polyethylene, polyvinyl chloride, polyester (polyethylene terephthalate or polyethylene naphthalate), polycarbonate, polyurethane, polymethyl(meth)acrylate (PMMA), polyurethane acrylates, cellulose acetate, cellulose triacetate, ethyl cellulose, nonwovens (e.g., papers, cloths, nonwoven scrims), and metal foils. Foam backings may be used. Examples of other substrates include, but are not limited to, metal such as stainless steel, metal or metal oxide coated polymeric material, metal or metal oxide coated glass, and the like.

The multilayer pressure sensitive adhesive assemblies of the present disclosure may be used in any conventionally known article such as labels, tapes, signs, covers, marking indices, display components, touch panels, and the like. Flexible backing materials having microreplicated surfaces are also contemplated. The substrate to which the multilayer pressure sensitive adhesive assembly may be applied is selected depending on the particular application. For example, the multilayer pressure sensitive adhesive assembly may be applied to sheeting products (e.g., decorative graphics and reflective products), label stock, and tape backings. Additionally, the multilayer pressure sensitive adhesive assembly may be applied directly onto other substrates such as a metal panel (e.g., automotive panel) or a glass window so that yet another substrate or object can be attached to the panel or window. Accordingly, the multilayer pressure sensitive adhesive assembly of the present disclosure may find a particular use in the automotive manufacturing industry (e.g. for attachment of exterior trim parts or for weatherstrips), in the construction industry, in the solar panel construction industry, or in the electronic industry (e.g. for the fixation of displays in mobile hand held devices).

As such, the multilayer pressure sensitive adhesive assemblies according to the present disclosure are particularly suited for (industrial) interior applications, more in particular for construction market applications, automotive applications or electronic applications. In the context of automotive applications, the multilayer pressure sensitive adhesive assemblies as described herein may find particular use for adhering e.g. automotive body side mouldings, weather strips or rearview mirrors. The multilayer pressure sensitive adhesive assemblies according to the present disclosure are particularly suitable for adhesion to substrates/panels painted with automotive paint systems comprising a base electrocoat or a pigmented basecoat, and in particular to clear coat surfaces, in particular clear coats for automotive vehicles. The multilayer pressure sensitive adhesive assemblies according to the present disclosure are particularly suited for adhesion to low energy surfaces, such as polypropylene, polyethylene or copolymers thereof.

Accordingly, the present disclosure is further directed to the use of a multilayer pressure sensitive adhesive assembly as described above for industrial applications, preferably for interior (industrial) applications, more preferably for construction market applications, automotive applications or electronic applications.

In another aspect, the present disclosure is further directed to the use of a multilayer pressure sensitive adhesive assembly as described above for automotive applications, in particular for taped seal on body, taped seal on door, exterior and interior parts attachment and weather-strip tape applications for the automotive industry.

In some aspects, the multilayer pressure sensitive adhesive assembly according to the present disclosure may be particularly useful for forming strong adhesive bonds to low surface energy (LSE) substrates.

However, the use of these multilayer pressure sensitive adhesive assemblies is not limited to low surface energy substrates. The multilayer pressure sensitive adhesive assemblies may, in some aspects, surprisingly bond well to medium surface energy (MSE) substrates. Included among such materials are polyamide 6 (PA6), acrylonitrile butadiene styrene (ABS), PC/ABS blends, PC, PVC, PA, polyurethane, PUR, TPE, POM, polystyrene, poly(methyl methacrylate) (PMMA), clear coat surfaces, in particular clear coats for vehicles like a car or coated surfaces for industrial applications and composite materials like fiber reinforced plastics.

Accordingly, the present disclosure is further directed to the use of a multilayer pressure sensitive adhesive assembly as above described for the bonding to a low surface energy substrate and/or a medium surface energy substrate.

The multilayer pressure sensitive adhesive assembly may also be provided as a single coated or double coated tape in which the multilayer pressure sensitive adhesive assembly is disposed on a permanent backing. Backings can be made from plastics (e.g., polypropylene, including biaxially oriented polypropylene, vinyl, polyolefin such as polyethylene, polyurethanes, polyurethane acrylates, polyesters such as polyethylene terephthalate), nonwovens (e.g., papers, cloths, nonwoven scrims), metal foils, foams (e.g., polyacrylic, polyethylene, polyurethane, neoprene), and the like. Polymeric foams are commercially available from various suppliers such as 3M Co., Voltek, Sekisui, and others.

### EXAMPLES

The present disclosure is further illustrated by the following examples.

### Test Methods applied:

### TGA test method

The TGA (Thermogravimetric Analysis) measurements are performed with a Q5000 IR equipment from Texas Instruments. The samples are weighed in a platinum pan and placed with an auto sampler in the oven of the apparatus. The nitrogen flow through the oven is 25mL/min, the nitrogen flow through the balance is 10mL/min. The temperature is equilibrated at 30°C and is held for 15 minutes. Then the temperature is increased to 90°C with a ramp of 60°C/min. The 90°C are then held for 30 minutes. In a next step, the temperature is increased to 120°C with a ramp of 60°C/min. The 120°C are held for 60 minutes. The weight losses during 30 minutes at 90°C (VOC analysis) and during 60 minutes at 120°C (FOG analysis) are recorded. The test is then completed by increasing the temperature to 800°C with a ramp of 10°C/min. Then, the temperature is equilibrated at 600°C, the oven is purged with air and the temperature is increased to 900°C with a ramp of 10°C/min.

### Oven Outgassing test method

A measure for the outgassing of raw material samples is accomplished by weighing 10g of the selected raw material into an aluminum cup with a precision of 0.1 mg. Prior to this step, the aluminum cup is already weighed out with a precision in the range of 0.1 mg. The weighed-in test sample is then placed into a forced air oven for 2 hours at 120°C or 2 hours at 160°C. Once the sample is removed from the oven, it is allowed to cool at ambient temperature (23°C +/- 2°C) for 30 minutes before weighing the filled aluminum cup again. The weight loss of the sample before and after oven drying is calculated and recorded in %.

### Thermal desorption analysis of organic emissions according to VDA test method 278

VDA method 278 is a test method used for the determination of organic emissions from non-metallic trim components used to manufacture the interior of motor vehicles (VDA stands for "Verband der Automobilindustrie", the German Association of Automobilists). The method classifies the emitted organic compounds into two groups:
VOC value - the sum of volatile and semi-volatile compounds up to n-C₂₅ and
FOG value - the sum of the semi-volatile and heavy compounds from n-C₁₄ to n-C₃₂

For measuring the VOC and FOG values, adhesive samples of 30mg +/- 5mg are weighed directly into empty glass sample tubes. The volatile and semi-volatile organic compounds are extracted from the samples into the gas stream and are then re-focused onto a secondary trap prior to injection into a GC for analysis. An automated thermal desorber (Markes International Ultra-UNITY system) is hereby used for the VDA 278 testing.

The test method comprises two extraction stages:
- VOC analysis, which involves desorbing the sample at 90°C for 30 minutes to extract VOC's up to n-C₂₅. This is followed by a semi-quantitative analysis of each compound as µg toluene equivalents per gram of sample.
- FOG analysis, which involves desorbing the sample at 120°C for 60 minutes to extract semi-volatile compounds ranging from n-C₁₄ to n-C₃₂. This is followed by semi-quantitative analysis of each compound as µg hexadecane equivalents per gram of sample.

The VOC values expressed are the average of two measurements per sample. The higher value of the measurements is indicated as the result, as described in the VDA278 test method. In order to determine the FOG value, the second sample is retained in the desorption tube after the VOC analysis and reheated to 120 °C for 60 minutes.

### 90°-Peel-test at 300 mm/min (according to FINAT Test Method No. 2, 8th edition 2009)

Multilayer pressure sensitive adhesive assembly strips according to the present disclosure and having a width of 10 mm and a length > 120 mm are cut out in the machine direction from the sample material.

For test sample preparation the liner is first removed from the one adhesive side and placed on an aluminum strip having the following dimension 22 x 1.6 cm, 0.13 mm thickness. Then, the adhesive coated side of each PSA assembly strip is placed, after the liner is removed, with its adhesive side down on a clean test panel using light finger pressure. Next, the test samples are rolled twice with a standard FINAT test roller (weight 6.8 kg) at a speed of approximately 10 mm per second to obtain intimate contact between the adhesive mass and the surface. After applying the pressure sensitive adhesive assembly strips to the test panel, the test samples are allowed to dwell for 72h at ambient room temperature (23°C +/- 2°C, 50% relative humidity +/-5%) prior to testing.

For peel testing the test samples are in a first step clamped in the lower movable jaw of a Zwick tensile tester (Model Z020 commercially available from Zwick/Roell GmbH, Ulm, Germany). The multilayer pressure sensitive adhesive film strips are folded back at an angle of 90° and their free ends grasped in the upper jaw of the tensile tester in a configuration commonly utilized for 90° measurements. The tensile tester is set at 300 mm per minute jaw separation rate. Test results are expressed in Newton per 10 mm (N/10 mm). The quoted peel values are the average of two 90°-peel measurements.

### Static shear test @ 70 °C with 500g (FINAT Test Method No. 8, 8th edition 2009)

The test is carried out at 70°C. Test specimens are cut out having a dimension of 12.7 mm by 25.4 mm. The liner is then removed from one side of the test specimen and the adhesive is adhered onto to an aluminum plate having the following dimension 25.4 x50x1 mm thickness and comprising a hole for the weight. The second liner is thereafter removed from the test specimen and the small panel with the test specimen is applied onto the respective test panel having the following dimensions: 50mm x 50mm x 2mm at the short edge. Next, the test samples are rolled twice with a standard FINAT test roller (weight 6.8 kg) at a speed of approximately 5 mm per second to obtain intimate contact between the adhesive mass and the surface. After applying the pressure sensitive adhesive assembly strips to the test panel, the test samples are allowed to dwell for 24h at ambient room temperature (23°C +/- 2°C, 50% relative humidity +/-5%) prior to testing. Each sample is then placed into a vertical shear-stand (+2° disposition) at 70°C with automatic time logging. After 10 minutes dwell time in the oven, a 500g weight is hung into the hole of the aluminum plate. The time until failure is measured and recorded in minutes. Per test specimen two samples are measured.

### Molecular Weight measurement

The weight average molecular weight of the polymers is determined using conventional gel permeation chromatography (GPC). The GPC apparatus obtained from Waters, included a high pressure liquid chromatography pump (Model 600E), an auto-sampler (Model 712 WISP), and a refractive index detector (Model 2414). The chromatograph is equipped with three Mixed Bed type B (10µm particle) columns 300 x 7.5 mm from Agilent. Polymeric solutions for testing are prepared by dissolving a polymer in 1ml tetrahydrofuran at a concentration of 0.3% polymer by weight. 300 µl etheral alcoholic diazomethane solution (0.4 mol/l) is added and the sample is kept for 60 minutes at room temperature. The sample is then blown to dryness under a stream of nitrogen at room temperature. The dried sample is dissolved in THF, containing 0.1% toluene, to yield a 0.1% w/v solution. The solution is then filtered through a 0.45 micron polytetrafluoroethylene filter. 100 µl of the resulting solution is injected into the GPC and eluted at a rate of 1.00 milliliter per minute through the columns maintained at 40°C. Toluene is used as a flow rate marker. The system is calibrated with polystyrene standards (10 standards, divided in 3 solutions in the range between 470 Da and 7300000 Da) using a 3rd order regression analysis to establish a calibration curve. The weight average molecular weight (Mw) is calculated for each sample from the calibration curve.

### Test Substrates used for testing:

The multilayer pressure sensitive adhesive adhesives and assemblies according to the present disclosure are tested for their adhesive properties on following substrates:
- PP/EPDM: injection molded polypropylene/EPDM plate ("Kunststoffplatte, spritzgegossen"; 150mm x 105mm x 2mm) based on Exxtral BMU 130 resin, available from Rocholl GmbH, Aglatershausen, Germany.

Prior to testing, the PP/EPDM substrates are cleaned as follows:
The PP/EPDM panels are cleaned first with a dry tissue applied with gentle force to remove any residuals / waxy compounds on the surface and then cleaned with a mixture of isopropyl alcohol: distilled water (1:1) and dried with a tissue.

The adhesive tests are further also carried out on the following automotive clear coat panel: **CeramiClear5** ("**CC5"**) coated panels available from PPG Industries.

The upper mentioned automotive clear coat includes acrylic resins and polyesters used alone or with mixtures of copolymers comprising hydroxy- or glycidyl-functionalities or carbamatic acid residues (groups); or copolymers of acrylic acid and methacrylic acid esters with hydroxyl groups, free acid groups and further co-monomers (e.g. styrene). Panels are cut prior to 90 °peel and shear testing to the requested dimension. Before testing, the automotive clear coat coated panels are cleaned with a 1:1 mixture of isopropylalcohol and distilled water. Test panels are then wiped dry with a paper tissue.

### Raw materials used:

The raw materials and commercial adhesive tapes used are summarized in Table 1 below.

**Table 1: Raw material list.**

| Name | Description | Supplier |
|---|---|---|
| EX 4011 | Black PSA Acrylic foam tape with a thickness of 1150 µm. | 3M |
| ACX 7065 | Black Acrylic foam tape with a thickness of 1200 µm. | Tesa |
| Kraton D1340 | Polymodal asymmetric SIS star block copolymer | Kraton polymers |
| Kraton D1161 | Linear block copolymer (15% Styrene, 19% Diblock) | Kraton polymers |
| Kraton D1118 | Diblock copolymer based on styrene and butadiene with a polystyrene content of 33% | Kraton polymers |
| Escorez 5615 | aliphatic/aromatic hydrocarbon resin | Exxon Mobil |
| Escorez 1304 | Aliphatic hydrocarbon resin | Exxon Mobil |
| Arkon P125 | Fully hydrogenated resin | Arakawa Europe |
| Arkon P140 | Fully hydrogenated resin | Arakawa Europe |
| Regalite 1125 | Fully hydrogenated resin | Eastman |
| Regalite R9100 | Partially hydrogenated resin | Eastman |
| Regalite R1090 | Fully hydrogenated resin | Eastman |
| Piccotac 1020E | Liquid aliphatic hydrocarbon resin | Eastman |
| Oppanol B10N | Polyisobutylene of Mw=36000g/mol | BASF |
| Oppanol B12N | Polyisobutylene of Mw=51000g/mol | BASF |
| Nyplast 222B | Mineral Oil | Nynas |
| Glissopal 1000 | Polyisobutylene of Mw=1600g/mol | BASF |
| Glissopal V1500 | Polyisobutylene of Mw=4140g/mol | BASF |
| EMS FN100MD | Expandable microspheres | Lehmann & Voss |
| Irganox 1010 | Heat stabilizer | BASF |
| Irganox 1076 | Heat stabilizer | BASF |
| Irgacure 651 | 2,2 dimethoxy-2-phenylacetophenone | BASF |
| Darocur 1173 | UV initiator | Ciba |
| Renol Schwarz | Carbon Black Masterbatch in EVA | Clariant |
| EVA Film VA 24 | Heat sealable ethylene-vinyl acetate film having 6% vinyl acetate | Consolidated Thermoplastics Company, Schaumburg, IL |
| IBOA | Isobornyl acrylate is a ester of isobornylalcohol and acrylic acid | Sigma Aldrich |
| AA | Acrylic acid | Sigma Aldrich |
| IOTG | Isooctyl thioglycolate, chain transfer agent | Sigma Aldrich |

### Screening of raw materials with regard to low VOC:

In order to screen the raw materials in advance concerning their outgassing behavior and thermal stability, an oven outgassing test, as described in the previous test method part, is performed at 120°C and 160°C. Results are provided in Table 2 below.

**Table 2**

| Raw Material | weight loss 2h 120°C (%) | weight loss 2h 160°C (%) |
|---|---|---|
| Regalite 9100 | 0,15 | 2,53 |
| Regalite 1090 | 0,25 | 4,99 |
| Escorez 5615 | 0,04 | 0,21 |
| Escorez 1304 | 0,06 | 0,52 |
| Piccotac 1020E | 0,20 | 1,12 |
| Oppanol B10N | 0,05 | 0,22 |
| Oppanol B12N | - | 0,07 |

In Table 2, the tackifying hydrocarbon resins Escorez 5615 and Escorez 1304 show a very low outgassing at 120°C and a very good thermal stability at 160°C. In contrast, Regalite R9100 and R1090 show higher outgassing behavior at 120°C and a significant weight loss at 160°C. The weight loss at 160°C provides a good indication of the thermal stability of a raw material and its behavior when processed at high temperatures in a hot melt type process.

Concerning the plasticizers, both of the polyisobutylene resins Oppanol B10N and B12N show very low outgassing behavior when compared to the liquid hydrocarbon resin Piccotac 1020E and excellent heat stability at 160°C. Based on these findings a preselection concerning low VOC behavior can be envisaged.

Another way of pre-screening the raw materials concerning their improved low VOC behavior is by TGA (thermogravimetric analysis) measurements, as previously described in the test method section. Results of the TGA measurements are found in Table 3 below, the values are an average of 2 measurements. These include also a comparison to an existing and commercially available acrylic adhesive based foam tape.

**Table 3**

| Raw Material | Weight loss 30 min at 90°C (in ppm) | Weight loss 60 min at 120°C (in ppm) |
|---|---|---|
| ACX 7065 | 1974±13 | 5732±112 |
| Kraton D1340 | 326±76 | 234±99 |
| Kraton D1161 | 669±47 | 253±101 |
| Regalite 9100 | 1353±223 | 10905±1325 |
| Regalite 1090 | 2409±457 | 20792±284 |
| Escorez 1304 | 296±64 | 1476±155 |
| Escorez 5615 | 258±153 | 727±180 |
| Nyplast 222B | 1225±231 | 16817±1664 |
| Glissopal 1000 | 8730±622 | 18363±658 |
| Glissopal V1500 | 2310±148 | 4419±206 |
| Oppanol B10N | 558±75 | 1707±274 |
| Oppanol B12N | 285±34 | 538±25 |

From Table 3, the difference in outgassing of polymeric plasticizers in function of their weight average molecular weight Mw can be further seen. While the polyisobutylene plasticizer Oppanol B12N with 51000g/mol has very low outgassing at 90 and 120°C, Glissopal 1000 and V1500 which are polyisobutylenes having a weight average molecular weight Mw of respectively 1600 and 4140g/mol have very high amounts of volatile organic compounds.

Current commercially available acrylic based PSA foam tapes exhibit high levels of VOCs and Fog values when analysed with the TGA test method. The acrylic PSA foam tape ACX 7065 has a weight loss of 1974 ppm after 30 minutes at 90°C and 5732 ppm of weight loss after further 60 minutes at 120°C.

The combination of oven outgassing test results with TGA test results clearly indicates favorable selections of raw materials for low VOC multilayer pressure sensitive adhesive assemblies.

### Example preparation (3 - layer coextruded PSA assemblies):

### (Meth)acrylate copolymer having a Tg higher than 25°C and a weight average molecular weight (Mw) comprised between 1000 and 100.000 Daltons.

The (meth)acrylate copolymers for use herein are prepared according to the general polymerization method described in U.S. Pat. Nos. 4,619,979 (Kotnour et al.) and 5,804,610 (Hamer et al.). The following general procedure is used: Pre-polymerized compositions are prepared in amber bottles. These compositions are purged under nitrogen for 5 minutes, and 26 grams of the compositions are placed in (18 cm x 5 cm) clear heat sealable poly(ethylene vinyl acetate) packages. Air is removed from the packages and they are sealed using a heat sealer. The sealed packages are immersed in a constant temperature bath at 16°C and irradiated with UV light (365 nm), with a controlled UV intensity for 12 minutes. The method of forming the packages and curing are described in Example 1 of U.S. Patent No. 5,804,610. The (meth)acrylate copolymer formulation is described in Table 4 below.

**Table 4**

| | Amount |
|---|---|
| Isobornyl acrylate | 97 |
| Acrylic acid | 3 |
| Irgacure 651 | 1 |
| IOTG | 0.75 |

### First and/or second pressure sensitive adhesive layer(s) preparation ("skin layer")

Pressure sensitive skin adhesive formulations with compositions as described in Table 5 are compounded in a 25 mm co-rotating twin screw extruder (ZSK25 from Coperion GmbH, Stuttgart, Germany) having 11 heat zones and a L/D (length/diameter) ratio of 46. Pressure sensitive skin adhesive formulation C1 is a comparative formulation not comprising any (meth)acrylate copolymer.

**Table 5**

| | Skin 1 (C1) | Skin 2 (S1) | Skin 3 (S2) | Skin 4 (S3) | Skin 5 (S4) | Skin 6 (S5) | Skin 7 (S6) |
|---|---|---|---|---|---|---|---|
| Kraton D1161 | 53.5 | 44.5 | 39.5 | 37.5 | 39.5 | 38.5 | 37.5 |
| Kraton D1118 | 9 | 9 | 9 | 7 | 9 | 9 | 7 |
| Kraton D1340 | - | - | - | 8 | - | 4 | 8 |
| Irganox 1010 | 1.2 | 1.2 | 1.2 | 1.2 | 1.2 | 1.2 | 1.2 |
| Regalite 1125 | - | 33 | 38 | 36 | - | - | - |
| Arkon P125 | - | - | - | - | 38 | 36 | 36 |
| Arkon P140 | 34 | - | - | - | - | - | - |
| (Meth) acrylate copolymer | - | 10 | 10 | 8 | 10 | 9 | 8 |

### Polymeric foam layer

The polymeric foam layer formulation is described in Table 6 below and is compounded in a 25 mm co-rotating twin screw extruder (ZSK25 from Coperion GmbH, Stuttgart, Germany) having 11 heat zones and a L/D (length/diameter) ratio of 60.

**Table 6**

| | Foam 1 |
|---|---|
| Kraton D1340 | 45 |
| Irganox 1010 | 1.35 |
| Escorez 5615 | 40 |
| Oppanol B12N | 15 |
| EMS FN100MD | 2 |
| Carbon Black EVA | 0.40 |

### Examples preparation:

As multilayer pressure sensitive adhesive assemblies according to the present disclosure, 3-layer co-extruded tapes are prepared by co-extruding a first and second pressure sensitive adhesive layer onto the opposing sides of the polymeric foam layer through a 3-layer multi manifold film die. The 3-layer co-extruded pressure sensitive adhesive assembly is cast between a silicone coated casting roll and a siliconized paper liner entrained by a second chill roll. The chill rolls are cooled with water at a temperature of about 13°C. Once cooled down the co-extruded pressure sensitive adhesive assembly leaves the silicone release coated roll hereby adhering to the silicone coated paper liner and is then rolled up in a winding station. The 3-layer co-extruded pressure sensitive adhesive assembly already had sufficient dimensional stability when wound up, deeming additional in-line e-beam crosslinking optional.

The multilayer pressure sensitive adhesive assembly examples used for mechanical testing as well as VDA 278 testing, are described later in Table 7. Hereby, 3-layer co-extruded pressure sensitive adhesive assemblies are exposed to closed face e-beaming (CF) and open face e-beaming (OF) conditions. In the closed face (CF) processing, the two opposing sides of each 3-layer co-extruded multilayer pressure sensitive adhesive assembly are covered with silicone coated polyethylene release liners and the PSA assembly is e-beamed through the liners from both sides. E-beaming takes place from both sides with an acceleration tension of 275kV and an irradiation dose selected from 7.5 MRad or 9.5 MRad.

**Table 7**

| Example | "Skin" layer | Foam layer | Acceleration tension (kV) | E-beam dose (MRad) |
|---|---|---|---|---|
| Ex.1 | C1 | Foam 1 | 275 | 9.5 |
| Ex.2 | S1 | Foam 1 | 275 | 9.5 |
| Ex.3 | S2 | Foam 1 | 275 | 9.5 |
| Ex.4 | S3 | Foam 2 | 275 | 9.5 |
| Ex.5 | S4 | Foam 1 | 275 | 9.5 |
| Ex.6 | S5 | Foam 1 | 275 | 7.5 or 9.5 |
| Ex.7 | S6 | Foam 1 | 275 | 7.5 or 9.5 |

### Mechanical Test Results of multilayer PSA assembly examples:

### Test results for 90°Peel at room temperature (RT) and Static Shear (SS) at 70°C

90° Peel test results at RT and Static Shear test results at 70°C of the examples are shown in Table 8 below.

**Table 8: 90°Peel at RT and Static Shear at 70°C test results.**

| Example | 90° Peel to CC5 at RT(N/cm) | Static Shear at 70°C on PP/EPDM (min) |
|---|---|---|
| Ex.1 | 18 | 277 |
| Ex.2 | 81 | 555 |
| Ex.3 | 77 | 7044 |
| Ex.4 | 76 | 5539 |
| Ex.5 | 81 | 5593 |
| Ex.6 | 79 ^{(*)} | >10000 |
| Ex.7 | 75 ^{(*)} | 2733 |
| EX4011 | 44 | 1326 |

| | | |
|---|---|---|
| ^{(*)} E-beam irradiation dose of 7.5 MRad. | | |

The peel performance on automotive clear coat CC5, as well as the static shear performance at 70°C on low surface energy substrate PP/EPDM, of all coextruded examples are very high.

In contrast, comparative examples C1 (PSA skin without (meth)acrylate copolymer) and EX4011 (commercially available PSA tape) do not show such as good combination of peel and static shear performance.

### VDA 278 analysis of the multilayer pressure sensitive adhesive assembly examples

Table 9 provides an overview of the VOC and FOG levels of the multilayer sensitive adhesive assemblies of the disclosure measured according to the VDA278 test method. For the acrylic based PSA foam tape ACX 7065, the VOC and Fog levels are very high (respectively 2540 ppm and 7870 ppm), whereas for the pressure sensitive adhesive assembly examples according to the disclosure, the VOC and Fog levels are low with less than 900 ppm for all tested examples.

**Table 9**

| Example | VOC level from VDA 278 (ppm) | FOG level from VDA 278 (ppm) |
|---|---|---|
| Ex.1 | 348 | 318 |
| Ex.2 | 677 | 318 |
| Ex.3 | 822 | 346 |
| Ex.4 | 696 | 380 |
| Ex.5 | 615 | 242 |
| Ex.6 | 515 | 202 |
| Ex.7 | 683 | 219 |
| ACX 7065 | 2540 | 7870 |

## Claims

1. A multilayer pressure sensitive adhesive assembly comprising a polymeric foam layer and a first pressure sensitive adhesive layer adjacent to the polymeric foam layer, wherein the polymeric foam comprises:
a) a multi-arm block copolymer having the formula Qₙ-Y, wherein:
(i) Q represents an arm of the multi-arm block copolymer and each arm independently has the formula G-R,
(ii) n represents the number of arms and is a whole number of at least 3, and
(iii) Y is the residue of a multifunctional coupling agent,
wherein each R is a rubbery block comprising a polymerized conjugated diene, a hydrogenated derivative of a polymerized conjugated diene, or combinations thereof; and each G is a glassy block comprising a polymerized monovinyl aromatic monomer;
b) a polymeric plasticizer having a weight average molecular weight Mw of at least 10.000 g/mol;
c) at least one hydrocarbon tackifier, wherein the hydrocarbon tackifier(s) have a Volatile Organic Compound (VOC) value of less than 1000 ppm, when measured by thermogravimetric analysis according to the weight loss test methods described in the experimental section; and
d) optionally, a linear block copolymer having the formula L - (G)ₘ, wherein L is a rubbery block comprising a polymerized olefin, a polymerized conjugated diene, a hydrogenated derivative of a polymerized conjugated diene, or any combinations thereof; and wherein m is 1 or 2;
and wherein the first pressure sensitive adhesive comprises:
a) a linear block copolymer having the formula M - (G)ₚ, wherein M is a rubbery block comprising a polymerized olefin, a polymerized conjugated diene, a hydrogenated derivative of a polymerized conjugated diene, or any combinations thereof; and wherein p is 1 or 2;
b) at least one second hydrocarbon tackifier;
c) a (meth)acrylate copolymer having a Tg higher than 25°C and a weight average molecular weight (Mw) comprised between 1000 and 100.000 Daltons, and comprising:
(i) (meth)acrylic acid ester monomer units having a Tg higher than 25°C when homopolymerized; and
(ii) optionally, monofunctional ethylenically unsaturated comonomer units;
d) optionally, a multi-arm block copolymer having the formula S_{q}-Z, wherein:
(i) S represents an arm of the multi-arm block copolymer and each arm independently has the formula G-N,
(ii) q represents the number of arms and is a whole number of at least 3, and
(iii) Z is the residue of a multifunctional coupling agent,
wherein each N is a rubbery block comprising a polymerized conjugated diene, a hydrogenated derivative of a polymerized conjugated diene, or combinations thereof; and
e) optionally, a diblock copolymer having the formula T - (G), wherein T is a rubbery block comprising a polymerized olefin, a polymerized conjugated diene, a hydrogenated derivative of a polymerized conjugated diene, or any combinations thereof,
wherein the Tg is calculated by application of Fox Equation and the Mw is determined using gel permeation chromatography (GPC) described in the experimental section.

2. A multilayer pressure sensitive adhesive assembly according to claim 1, wherein the hydrocarbon tackifier(s) have a Volatile Organic Compound (VOC) value of less than 800 ppm, less than 600 ppm, less than 400 ppm or even less than 200 ppm, when measured by thermogravimetric analysis according to the weight loss test method described in the experimental section.

3. A multilayer pressure sensitive adhesive assembly according to any of the preceding claims, wherein the rubbery block R of the multi-arm block copolymer having the formula Qₙ-Y and/or the rubbery block N of the multi-arm block copolymer having the formula S_{q}-Z comprise an olefin selected to be isobutylene or a conjugated diene selected from the group consisting of isoprene, butadiene, and any combinations thereof.

4. A multilayer pressure sensitive adhesive assembly according to any of the preceding claims, wherein the rubbery block L of the linear block copolymer having the formula L - (G)ₘ, and/or the rubbery block M of the linear block copolymer having the formula M - (G)ₚ, comprise an olefin selected to be isobutylene or a conjugated diene selected from the group consisting of isoprene, butadiene, and any combinations thereof.

5. A multilayer pressure sensitive adhesive assembly according to any of the preceding claims, wherein the rubbery block T of the diblock copolymer having the formula T - (G) comprises an olefin selected to be isobutylene or a conjugated diene selected from the group consisting of isoprene, butadiene, and any combinations thereof.

6. A multilayer pressure sensitive adhesive assembly according to any of the preceding claims, wherein at least one glassy block G of the linear block copolymer having the formula L - (G)ₘ, and/or at least one glassy block G of the linear block copolymer having the formula M - (G)ₚ, is a mono vinyl aromatic monomer selected from the group consisting of styrene, styrene-compatible blends, and any combinations thereof.

7. A multilayer pressure sensitive adhesive assembly according to any of the preceding claims, wherein at least one of the glassy blocks of the multi-arm block copolymer having the formula Qₙ-Y and/or at least one of the glassy blocks of the multi-arm block copolymer having the formula S_{q}-Z, is a monovinyl aromatic monomer selected from the group consisting of styrene, styrene-compatible blends, and any combinations thereof; preferably wherein each of the glassy blocks of the multi-arm block copolymer having the formula Qₙ-Y and/or each of the glassy blocks of the multi-arm block copolymer having the formula S_{q}-Z, is a monovinyl aromatic monomer selected from the group consisting of styrene, styrene-compatible blends, and any combinations thereof.

8. A multilayer pressure sensitive adhesive assembly according to any one of the preceding claims, wherein the polymeric foam comprises:
a) from 20 wt% to 80 wt%, from 20 wt% to 70 wt%, from 25 wt% to 60 wt%, or even from 25 wt% to 50 wt% of the multi-arm block copolymer, based on the weight of the polymeric foam;
b) from 20 wt% to 70 wt%, from 25 wt% to 60 wt%, or even from 25 wt% to 50 wt% of the hydrocarbon tackifier(s), based on the weight of the polymeric foam;
c) from 2 wt% to 20 wt%, from 4 wt% to 15 wt%, or even from 6 wt% to 15 wt% of the polymeric plasticizer, based on the weight of the polymeric foam;
d) optionally, from 3 wt% to 40 wt%, from 5 wt% to 30 wt%, or even from 10 wt% to 25 wt% of linear block copolymer, based on the weight of the polymeric foam; and
e) optionally, from 0.1 wt% to 10 wt%, from 0.5 wt% to 8 wt%, from 1 wt% to 6 wt%, or even from 2 wt% to 5 wt% of a crosslinking additive, based on the weight of the polymeric foam, and wherein the crosslinking additive is preferably selected from the group of multifunctional (meth)acrylate compounds.

9. A multilayer pressure sensitive adhesive assembly according to any of the preceding claims, wherein the (meth)acrylate copolymer has a Tg higher than 25°C, higher than 40°C, higher than 50°C, higher than 60°C, or even higher than 70°C.

10. A multilayer pressure sensitive adhesive assembly according to any of the preceding claims, wherein the (meth)acrylate copolymer has a weight average molecular weight (Mw) comprised between 5000 and 80.000 Daltons, between 10.000 and 70.000 Daltons, between 15.000 and 60.000 Daltons, between 20.000 and 50.000 Daltons, or even between 25.000 and 45.000 Daltons.

11. A multilayer pressure sensitive adhesive assembly according to any of the preceding claims, wherein the (meth)acrylate copolymer comprises:
a) from 85 to 99.9 weight percent, from 90 to 99.5 weight percent, from 92 to 99 weight percent, from 94 to 98 weight percent, or even from 95 to 98 weight percent, of (meth)acrylic acid ester monomer units having a Tg higher than 25°C, wherein the (meth)acrylic acid ester monomer units are preferably selected to be isobornyl acrylate; and
b) optionally, from 0.1 to 15 weight percent, from 0.5 to 10 weight percent, from 1.0 to 8 weight percent, from 2.0 to 6.0 weight percent, or even from 2.0 to 5.0 weight percent of monofunctional ethylenically unsaturated comonomer units, preferably acid-functional monomer ethylenically unsaturated comonomer units, more preferably acrylic acid monomer units;
wherein the weight percentages are based on the total weight of the (meth)acrylate copolymer.

12. A multilayer pressure sensitive adhesive assembly according to any one of the preceding claims, wherein the first pressure sensitive adhesive comprises:
a) from 20 wt% to 80 wt%, from 20 wt% to 70 wt%, from 25 wt% to 60 wt%, or even from 25 wt% to 50 wt% of a linear block copolymer having the formula M - (G)ₚ, based on the weight of the first pressure sensitive adhesive; and
b) from 20 wt% to 70 wt%, from 20 wt% to 60 wt%, from 20 wt% to 55 wt%, from 25 wt% to 50 wt% or even from 25 wt% to 45 wt% of the second hydrocarbon tackifier(s), based on the weight of the first pressure sensitive adhesive;
c) from 3 wt% to 25 wt%, from 4 wt% to 20 wt%, from 5 wt% to 18 wt%, or even from 6 wt% to 15 wt% of the (meth)acrylate copolymer, based on the weight of the first pressure sensitive adhesive;
d) from 1 wt% to 15 wt%, from 2 wt% to 13 wt%, from 2 wt% to 10 wt%, or even from 3 wt% to 10 wt% of the optional multi-arm block copolymer having the formula S_{q}-Z, based on the weight of the first pressure sensitive adhesive;
e) from 1 wt% to 20 wt%, from 2 wt% to 15 wt%, from 4 wt% to 12 wt%, or even from 5 wt% to 10 wt% of the optional diblock copolymer having the formula T - (G), based on the weight of the first pressure sensitive adhesive; and
f) optionally, from 0.1 wt% to 10 wt%, from 0.5 wt% to 8 wt%, from 1 wt% to 6 wt%, or even from 2 wt% to 5 wt% of a crosslinking additive, based on the weight of the first pressure sensitive adhesive foam, and wherein the crosslinking additive is preferably selected from the group of multifunctional (meth)acrylate compounds.

13. A multilayer pressure sensitive adhesive assembly according to any of the preceding claims, which is obtained by melt co-extrusion, in particular hotmelt co-extrusion of the polymeric foam layer and the first pressure sensitive adhesive layer.

14. A method of manufacturing a multilayer pressure sensitive adhesive assembly according to any of claims 1 to 13, which comprises the step of melt co-extruding, in particular hotmelt co-extruding the polymeric foam layer, the first pressure sensitive adhesive layer, and optionally, the second pressure sensitive adhesive layer.

15. Use of a multilayer pressure sensitive adhesive assembly according to any of claims 1 to 13 for industrial applications, preferably for interior applications, more preferably for construction market applications, automotive applications or electronic applications.

## Patentansprüche

1. Eine mehrschichtige druckempfindliche Klebstoffanordnung, umfassend eine Polymerschaumschicht und eine erste Klebstoffschicht, die an die Polymerschaumschicht angrenzt, wobei der Polymerschaum Folgendes umfasst:
a) ein mehrarmiges Blockcopolymer mit der Formel Qₙ-Y, wobei:
(i) Q einen Arm des mehrarmigen Blockcopolymers darstellt und jeder Arm unabhängig die Formel G-R aufweist,
(ii) n die Anzahl an Armen darstellt und eine ganze Zahl von mindestens 3 ist und
(iii) Y der Rest eines multifunktionellen Haftvermittlers ist,
wobei jeder R ein gummiartiger Block ist, der ein polymerisiertes konjugiertes Dien, ein hydriertes Derivat eines polymerisierten konjugierten Diens oder Kombinationen davon umfasst; und jedes G ein glasartiger Block ist, der ein polymerisiertes aromatisches Monovinylmonomer umfasst;
b) einen polymeren Weichmacher mit einem gewichtsmittleren Molekulargewicht Mw von mindestens 10.000 g/mol;
c) mindestens einen Kohlenwasserstoff-Klebrigmacher, wobei der bzw. die Kohlenwasserstoff-Klebrigmacher einen Wert von flüchtigen organischen Verbindungen (VOC) von weniger als 1000 ppm aufweisen, wenn durch thermogravimetrische Analyse gemäß den in dem experimentellen Abschnitt beschriebenen Gewichtsverlust-Prüfverfahren gemessen; und
d) wahlweise ein lineares Blockcopolymer mit der Formel L - (G)ₘ, wobei L ein gummiartiger Block ist, der ein polymerisiertes Olefin, ein polymerisiertes konjugiertes Dien, ein hydriertes Derivat eines polymerisierten konjugierten Diens oder beliebige Kombinationen davon umfasst; und wobei m 1 oder 2 ist; und
wobei der erste druckempfindliche Klebstoff Folgendes umfasst:
a) ein lineares Blockcopolymer mit der Formel M - (G)ₚ, wobei M ein gummiartiger Block ist, der ein polymerisiertes Olefin, ein polymerisiertes konjugiertes Dien, ein hydriertes Derivat eines polymerisierten konjugierten Diens oder beliebige Kombinationen davon umfasst; und wobei p 1 oder 2 ist;
b) mindestens einen zweiten Kohlenwasserstoff-Klebrigmacher;
c) ein (Meth)acrylatcopolymer mit einer Tg höher als 25 °C und einem gewichtsmittleren Molekulargewicht (Mw) im Bereich zwischen 1000 und 100.000 Dalton, und umfassend:
(i) (Meth)acrylsäureester-Monomereinheiten mit einer Tg, wenn homopolymerisiert, höher als 25 °C; und
(ii) wahlweise, monofunktionelle, ethylenisch ungesättigte Comonomereinheiten;
d) wahlweise ein mehrarmiges Blockcopolymer mit der Formel S_{q}-Z, wobei:
(i) S einen Arm des mehrarmigen Blockcopolymers darstellt und jeder Arm unabhängig die Formel G-N aufweist,
(ii) q die Anzahl von Armen darstellt und eine ganze Zahl von mindestens 3 ist und
(iii) Z der Rest eines multifunktionellen Haftvermittlers ist, wobei jedes N ein gummiartiger Block ist, der ein polymerisiertes konjugiertes Dien, ein hydriertes Derivat eines polymerisierten konjugierten Diens oder Kombinationen davon umfasst; und
e) wahlweise ein Diblockcopolymer mit der Formel T - (G), wobei T ein gummiartiger Block ist, der ein polymerisiertes Olefin, ein polymerisiertes konjugiertes Dien, ein hydriertes Derivat eines polymerisierten konjugierten Diens oder beliebige Kombinationen davon umfasst, wobei die Tg durch Anwendung von Fox-Gleichung berechnet wird und das Mw unter Verwendung von Gelpermeationschromatographie (GPC), die in dem experimentellen Abschnitt beschrieben ist, bestimmt wird.

2. Eine mehrschichtige druckempfindliche Klebstoffanordnung nach Anspruch 1, wobei der bzw. die Kohlenwasserstoff-Klebrigmacher einen Wert von flüchtigen organischen Verbindungen (VOC) von weniger als 800 ppm, weniger als 600 ppm, weniger als 400 ppm oder sogar weniger als 200 ppm aufweisen, wenn durch thermogravimetrische Analyse gemäß dem in dem experimentellen Abschnitt beschriebenen Gewichtsverlust-Prüfverfahren gemessen.

3. Eine mehrschichtige druckempfindliche Klebstoffanordnung nach einem der vorstehenden Ansprüche, wobei der gummiartigen Block R des mehrarmigen Blockcopolymers mit der Formel Qₙ-Y und/oder der gummiartige Block N des mehrarmigen Blockcopolymers mit der Formel S_{q}-Z ein Olefin umfassen, ausgewählt, Isobutylen zu sein, oder ein konjugiertes Dien, ausgewählt aus der Gruppe bestehend aus Isopren, Butadien und beliebigen Kombinationen davon.

4. Eine mehrschichtige druckempfindliche Klebstoffanordnung nach einem der vorstehenden Ansprüche, wobei der gummiartigen Block L des linearen Blockcopolymers mit der Formel L - (G)ₘ und/oder der gummiartige Block M des linearen Blockcopolymers mit der Formel M - (G)ₚ ein Olefin umfassen, dafür ausgewählt, um Isobutylen zu sein, oder ein konjugiertes Dien, ausgewählt aus der Gruppe bestehend aus Isopren, Butadien und beliebigen Kombinationen davon.

5. Eine mehrschichtige Klebstoffanordnung nach einem der vorstehenden Ansprüche, wobei der gummiartige Block T des Diblockcopolymers mit der Formel T - (G) ein Olefin umfasst, dafür ausgewählt, um Isobutylen zu sein, oder ein konjugiertes Dien, ausgewählt aus der Gruppe bestehend aus Isopren, Butadien und beliebigen Kombinationen davon.

6. Eine mehrschichtige Haftkleberanordnung nach einem der vorstehenden Ansprüche, wobei mindestens ein glasartiger Block G des linearen Blockcopolymers mit der Formel L - (G)ₘ und/oder mindestens ein glasartiger Block G des linearen Blockcopolymers mit der Formel M - (G)ₚ ein aromatisches Monovinylmonomer ist, ausgewählt aus der Gruppe bestehend aus Styrol, styrolkompatiblen Gemischen und beliebigen Kombinationen davon.

7. Eine mehrschichtige Haftkleberanordnung nach einem der vorstehenden Ansprüche, wobei mindestens einer der glasartigen Blöcke des mehrarmigen Blockcopolymers mit der Formel Qₙ-Y und/oder mindestens einer der glasartigen Blöcke des mehrarmigen Blockcopolymers mit der Formel S_{q}-Z ein aromatisches Monovinylmonomer ist, ausgewählt aus der Gruppe bestehend aus Styrol, styrolkompatiblen Gemischen und beliebigen Kombinationen davon; wobei vorzugsweise jeder der glasartigen Blöcke des mehrarmigen Blockcopolymers mit der Formel Qₙ-Y und/oder jeder der glasartigen Blöcke des mehrarmigen Blockcopolymers mit der Formel S_{q}-Z ein aromatisches Monovinylmonomer ist, ausgewählt aus der Gruppe bestehend aus Styrol, styrolkompatiblen Gemischen und beliebigen Kombinationen davon.

8. Eine mehrschichtige Haftkleberanordnung nach einem der vorstehenden Ansprüche, wobei der Polymerschaum umfasst:
a) bezogen auf das Gewicht des Polymerschaums zu von 20 Gew.-% bis 80 Gew.-%, zu von 20 Gew.-% bis 70 Gew.-%, zu von 25 Gew.-% bis 60 Gew.-% oder sogar zu von 25 Gew.-% bis 50 Gew.-% das mehrarmige Blockcopolymer;
b) bezogen auf das Gewicht des Polymerschaums zu von 20 Gew.-% bis 70 Gew.-%, zu von 25 Gew.-% bis 60 Gew.-%, oder sogar zu von 25 Gew.-% bis 50 Gew.-% den bzw. die Kohlenwasserstoff-Klebrigmacher;
c) bezogen auf das Gewicht des Polymerschaums zu von 2 Gew.-% bis 20 Gew.-%, zu von 4 Gew.-% bis 15 Gew.-%, oder sogar zu von 6 Gew.-% bis 15 Gew.-% den polymeren Weichmacher;
d) wahlweise, bezogen auf das Gewicht des Polymerschaums, zu von 3 Gew.-% bis 40 Gew.-%, zu von 5 Gew.-% bis 30 Gew.-%, oder sogar zu von 10 Gew.-% bis 25 Gew.-% lineares Blockcopolymer; und
e) wahlweise, bezogen auf das Gewicht des Polymerschaums, zu von 0,1 Gew.-% bis 10 Gew.-%, zu von 0,5 Gew.-% bis 8 Gew.-%, zu von 1 Gew.-% bis 6 Gew.-% oder sogar zu von 2 Gew.-% bis 5 Gew.-% ein vernetzendes Additiv, und wobei das vernetzende Additiv vorzugsweise ausgewählt ist aus der Gruppe von multifunktionellen (Meth)acrylatverbindungen.

9. Eine mehrschichtige Haftkleberanordnung nach einem der vorstehenden Ansprüche, wobei das (Meth)acrylatcopolymer eine Tg höher als 25 °C, höher als 40 °C, höher als 50 °C, höher als 60 °C oder sogar höher als 70 °C aufweist.

10. Eine mehrschichtige Haftkleberanordnung nach einem der vorstehenden Ansprüche, wobei das (Meth)acrylatcopolymer ein gewichtsmittleres Molekulargewicht (Mw) im Bereich zwischen 5000 und 80.000 Dalton, zwischen 10.000 und 70.000 Dalton, zwischen 15.000 und 60.000 Dalton, zwischen 20.000 und 50.000 Dalton oder sogar zwischen 25.000 und 45.000 Dalton aufweist.

11. Eine mehrschichtige Haftkleberanordnung nach einem der vorstehenden Ansprüche, wobei das (Meth)acrylatcopolymer umfasst:
a) zu von 85 bis 99,9 Gewichtsprozent, zu von 90 bis 99,5 Gewichtsprozent, zu von 92 bis 99 Gewichtsprozent, zu von 94 bis 98 Gewichtsprozent oder sogar zu von 95 bis 98 Gewichtsprozent (Meth)acrylsäureester-Monomereinheiten mit einer Tg höher als 25 °C, wobei die (Meth)acrylsäureester-Monomereinheiten vorzugsweise ausgewählt sind, Isobornylacrylat zu sein; und
b) wahlweise zu von 0,1 bis 15 Gewichtsprozent, zu von 0,5 bis 10 Gewichtsprozent, zu von 1,0 bis 8 Gewichtsprozent, zu von 2,0 bis 6,0 Gewichtsprozent oder sogar zu von 2,0 bis 5,0 Gewichtsprozent monofunktionelle ethylenisch ungesättigte Comonomereinheiten, vorzugsweise säurefunktionelle Monomer-ethylenisch ungesättigte Comonomereinheiten, mehr bevorzugt Acrylsäure-Monomereinheiten; wobei die Gewichtsprozentsätze auf dem Gesamtgewicht des (Meth)acrylatcopolymers basiert sind.

12. Eine mehrschichtige Haftkleberanordnung nach einem der vorstehenden Ansprüche, wobei der erste Haftkleber umfasst:
a) bezogen auf das Gewicht des ersten Haftklebers zu von 20 Gew.-% bis 80 Gew.-%, zu von 20 Gew.-% bis 70 Gew.-%, zu von 25 Gew.-% bis 60 Gew.-% oder sogar zu von 25 Gew.-% bis 50 Gew.-% ein lineares Blockcopolymer mit der Formel M - (G)ₚ; und
b) bezogen auf das Gewicht des ersten Haftklebers zu von 20 Gew.-% bis 70 Gew.-%, zu von 20 Gew.-% bis 60 Gew.-%, zu von 20 Gew.-% bis 55 Gew.-%, zu von 25 Gew.-% bis 50 Gew.-% oder sogar zu von 25 Gew.-% bis 45 Gew.-% den/die zweiten Kohlenwasserstoff-Klebrigmacher;
c) bezogen auf das Gewicht des ersten Haftklebers zu von 3 Gew.-% bis 25 Gew.-%, zu von 4 Gew.-% bis 20 Gew.-%, zu von 5 Gew.-% bis 18 Gew.-% oder sogar zu von 6 Gew.-% bis 15 Gew.-% das (Meth)acrylatcopolymer;
d) bezogen auf das Gewicht des ersten Haftklebers zu von 1 Gew.-% bis 15 Gew.-%, zu von 2 Gew.-% bis 13 Gew.-%, zu von 2 Gew.-% bis 10 Gew.-% oder sogar zu von 3 Gew.-% bis 10 Gew.-% das wahlweisee mehrarmige Blockcopolymer mit der Formel S_{q}-Z;
e) bezogen auf das Gewicht des ersten Haftklebers zu von 1 Gew.-% bis 20 Gew.-%, zu von 2 Gew.-% bis 15 Gew.-%, zu von 4 Gew.-% bis 12 Gew.-% oder sogar zu von 5 Gew.-% bis 10 Gew.-% das wahlweisee Diblockcopolymer mit der Formel T - (G); und f) wahlweise, bezogen auf das Gewicht des ersten Haftkleberschaums, zu von 0,1 Gew.-% bis 10 Gew.-%, zu von 0,5 Gew.-% bis 8 Gew.-%, zu von 1 Gew.-% bis 6 Gew.-% oder sogar zu von 2 Gew.-% bis 5 Gew.-% ein vernetzendes Additiv, und wobei das vernetzende Additiv vorzugsweise ausgewählt ist aus der Gruppe von multifunktionellen (Meth)acrylatverbindungen.

13. Eine mehrschichtige Haftkleberanordnung nach einem der vorstehenden Ansprüche, die durch Schmelz-Coextrusion, insbesondere durch Heißschmelz-Coextrusion der Polymerschaumschicht und der ersten Haftkleberschicht erhalten wird.

14. Ein Verfahren zum Herstellen einer mehrschichtigen Haftkleberanordnung nach einem der Ansprüche 1 bis 13, das den Schritt des Schmelz-Coextrudierens, insbesondere des Heißschmelz-Coextrudierens der Polymerschaumschicht, der ersten Haftkleberschicht und wahlweise der zweiten Haftkleberschicht umfasst.

15. Verwendung einer mehrschichtigen Haftkleberanordnung nach einem der Ansprüche 1 bis 13 für industrielle Anwendungen, vorzugsweise für Anwendungen im Innenbereich, mehr bevorzugt für Baumarktanwendungen, Automobilanwendungen oder elektronische Anwendungen.

## Revendications

1. Ensemble adhésif sensible à la pression multicouche comprenant une couche de mousse polymère et une première couche d'adhésif sensible à la pression adjacente à la couche de mousse polymère, dans lequel la mousse polymère comprend :
a) un copolymère séquencé à bras multiples ayant la formule Qₙ₋Y, dans lequel :
(i) Q représente un bras du copolymère séquencé à bras multiples et chaque bras est indépendamment de formule G-R,
(ii) n représente le nombre de bras et est un nombre entier d'au moins 3, et
(iii) Y est le résidu d'un agent de couplage multifonctionnel,
dans lequel chaque R est une séquence caoutchouteuse comprenant un diène conjugué polymérisé, un dérivé hydrogéné d'un diène conjugué polymérisé, ou des combinaisons de ceux-ci ; et chaque G est une séquence vitreuse comprenant un monomère aromatique monovinylique polymérisé ;
b) un plastifiant polymère ayant une masse moléculaire moyenne en poids Mw d'au moins 10 000 g/mol ;
c) au moins un agent poisseux hydrocarboné, dans lequel le ou les agent(s) poisseux hydrocarboné(s) ont une valeur de composés organiques volatils (COV) inférieure à 1000 ppm, lorsqu'on mesure par analyse thermogravimétrique selon les procédés de test de perte de poids décrits dans la section expérimentale ; et
d) facultativement, un copolymère séquencé linéaire ayant la formule L - (G)ₘ, dans lequel L est une séquence caoutchouteuse comprenant une oléfine polymérisée, un diène conjugué polymérisé, un dérivé hydrogéné d'un diène conjugué polymérisé, ou n'importe quelles combinaisons de ceux-ci ; et dans lequel m vaut 1 ou 2 ; et
dans lequel le premier adhésif sensible à la pression comprend :
a) un copolymère séquencé linéaire ayant la formule M - (G)ₚ, dans lequel M est une séquence caoutchouteuse comprenant une oléfine polymérisée, un diène conjugué polymérisé, un dérivé hydrogéné d'un diène conjugué polymérisé, ou n'importe quelles combinaisons de ceux-ci ; et dans lequel p vaut 1 ou 2 ;
b) au moins un deuxième agent poisseux hydrocarboné ;
c) un copolymère de (méth)acrylate ayant une Tg supérieure à 25 °C et une masse moléculaire moyenne en poids (Mw) comprise entre 1000 et 100 000 Daltons, et comprenant :
(i) des motifs monomères ester d'acide (méth)acrylique ayant une Tg supérieure à 25 °C lorsqu'ils sont homopolymérisés ; et
(ii) facultativement, des motifs comonomères monofonctionnels à insaturation éthylénique ;
d) facultativement, un copolymère séquencé à bras multiples ayant la formule S_{q}-Z, dans lequel :
(i) S représente un bras du copolymère séquencé à bras multiples et chaque bras a indépendamment la formule G-N,
(ii) q représente le nombre de bras et est un nombre entier d'au moins 3, et
(iii) Z est le résidu d'un agent de couplage multifonctionnel, dans lequel chaque N est une séquence caoutchouteuse comprenant un diène conjugué polymérisé, un dérivé hydrogéné d'un diène conjugué polymérisé, ou des combinaisons de ceux-ci ; et
e) facultativement, un copolymère di-séquencé ayant la formule T - (G), dans lequel T est une séquence caoutchouteuse comprenant une oléfine polymérisée, un diène conjugué polymérisé, un dérivé hydrogéné d'un diène conjugué polymérisé, ou n'importe quelles combinaisons de ceux-ci,
dans lequel la Tg est calculée par application de l'équation de Fox et la Mw est déterminée en utilisant une chromatographie par perméation sur gel (GPC) décrite dans la section expérimentale.

2. Ensemble adhésif sensible à la pression multicouche selon la revendication 1, dans lequel le ou les agent(s) poisseux hydrocarboné(s) ont une valeur de composés organiques volatils (COV) inférieure à 800 ppm, inférieure à 600 ppm, inférieure à 400 ppm ou même inférieure à 200 ppm, lorsqu'on mesure par analyse thermogravimétrique selon le procédé de test de perte de poids décrit dans la section expérimentale.

3. Ensemble adhésif sensible à la pression multicouche selon l'une quelconque des revendications précédentes, dans lequel la séquence caoutchouteuse R du copolymère séquencé à bras multiples ayant la formule Qₙ-Y et/ou la séquence caoutchouteuse N du copolymère séquencé à bras multiples ayant la formule S_{q}-Z comprennent une oléfine choisie pour être isobutylène ou un diène conjugué choisi dans le groupe constitué d'isoprène, butadiène, et n'importe quelles combinaisons de ceux-ci.

4. Ensemble adhésif sensible à la pression multicouche selon l'une quelconque des revendications précédentes, dans lequel la séquence caoutchouteuse L du copolymère séquencé linéaire ayant la formule L - (G)ₘ, et/ou la séquence caoutchouteuse M du copolymère séquencé linéaire ayant la formule M - (G)ₚ, comprennent une oléfine choisie pour être isobutylène ou un diène conjugué choisi dans le groupe constitué d'isoprène, butadiène, et n'importe quelles combinaisons de ceux-ci.

5. Ensemble adhésif sensible à la pression multicouche selon l'une quelconque des revendications précédentes, dans lequel la séquence caoutchouteuse T du copolymère di-séquencé ayant la formule T - (G) comprend une oléfine choisie pour être isobutylène ou un diène conjugué choisi dans le groupe constitué d'isoprène, butadiène, et n'importe quelles combinaisons de ceux-ci.

6. Ensemble adhésif sensible à la pression multicouche selon l'une quelconque des revendications précédentes, dans lequel au moins une séquence vitreuse G du copolymère séquencé linéaire ayant la formule L - (G)ₘ, et/ou au moins une séquence vitreuse G du copolymère séquencé linéaire ayant la formule M - (G)ₚ, est un monomère aromatique monovinylique choisi dans le groupe constitué de styrène, mélanges compatibles avec du styrène, et n'importe quelles combinaisons de ceux-ci.

7. Ensemble adhésif sensible à la pression multicouche selon l'une quelconque des revendications précédentes, dans lequel au moins l'une des séquences vitreuses du copolymère séquencé à bras multiples ayant la formule Qₙ-Y et/ou au moins l'une des séquences vitreuses du copolymère séquencé à bras multiples ayant la formule S_{q}-Z, est un monomère aromatique monovinylique choisi dans le groupe constitué de styrène, mélanges compatibles avec du styrène, et n'importe quelles combinaisons de ceux-ci ; de préférence dans lequel chacune des séquences vitreuses du copolymère séquencé à bras multiples ayant la formule Qₙ-Y et/ou chacune des séquences vitreuses du copolymère séquencé à bras multiples ayant la formule S_{q}-Z, est un monomère aromatique monovinylique choisi dans le groupe constitué de styrène, mélanges compatibles avec du styrène, et n'importe quelles combinaisons de ceux-ci.

8. Ensemble adhésif sensible à la pression multicouche selon l'une quelconque des revendications précédentes, dans lequel la mousse polymère comprend :
a) de 20 % en poids à 80 % en poids, de 20 % en poids à 70 % en poids, de 25 % en poids à 60 % en poids, ou même de 25 % en poids à 50 % en poids du copolymère séquencé à bras multiples, sur la base du poids de la mousse polymère ;
b) de 20 % en poids à 70 % en poids, de 25 % en poids à 60 % en poids, ou même de 25 % en poids à 50 % en poids du ou des agent(s) poisseux hydrocarboné(s), sur la base du poids de la mousse polymère ;
c) de 2 % en poids à 20 % en poids, de 4 % en poids à 15 % en poids, ou même de 6 % en poids à 15 % en poids du plastifiant polymère, sur la base du poids de la mousse polymère ;
d) facultativement, de 3 % en poids à 40 % en poids, de 5 % en poids à 30 % en poids, ou même de 10 % en poids à 25 % en poids de copolymère séquencé linéaire, sur la base du poids de la mousse polymère ; et
e) facultativement, de 0,1 % en poids à 10 % en poids, de 0,5 % en poids à 8 % en poids, de 1 % en poids à 6 % en poids, ou même de 2 % en poids à 5 % en poids d'un additif de réticulation, sur la base du poids de la mousse polymère, et dans lequel l'additif de réticulation est de préférence choisi dans le groupe de composés (méth)acrylate multifonctionnels.

9. Ensemble adhésif sensible à la pression multicouche selon l'une quelconque des revendications précédentes, dans lequel le copolymère de (méth)acrylate a une Tg supérieure à 25 °C, supérieure à 40 °C, supérieure à 50 °C, supérieure à 60 °C, ou même supérieure à 70 °C.

10. Ensemble adhésif sensible à la pression multicouche selon l'une quelconque des revendications précédentes, dans lequel le copolymère de (méth)acrylate a une masse moléculaire moyenne en poids (Mw) comprise entre 5000 et 80 000 Daltons, entre 10 000 et 70 000 Daltons, entre 15 000 et 60 000 Daltons, entre 20 000 et 50 000 Daltons, ou même entre 25 000 et 45 000 Daltons.

11. Ensemble adhésif multicouche sensible à la pression selon l'une quelconque des revendications précédentes, dans lequel le copolymère de (méth)acrylate comprend :
a) de 85 à 99,9 pour cent en poids, de 90 à 99,5 pour cent en poids, de 92 à 99 pour cent en poids, de 94 à 98 pour cent en poids, ou même de 95 à 98 pour cent en poids, de motifs monomères ester d'acide (méth)acrylique ayant une Tg supérieure à 25 °C, dans lequel les motifs monomères ester d'acide (méth)acrylique sont de préférence choisie pour être acrylate d'isobornyle ; et
b) facultativement, de 0,1 à 15 % en poids, de 0,5 à 10 % en poids, de 1,0 à 8 % en poids, de 2,0 à 6,0 % en poids, ou même de 2,0 à 5,0 % en poids, de motifs comonomères monofonctionnels à insaturation éthylénique, de préférence des motifs comonomères à fonction acide monomères à insaturation éthylénique, plus préférablement des motifs monomères d'acide acrylique ;
dans lequel les pourcentages en poids sont basés sur le poids total du copolymère de (méth)acrylate.

12. Ensemble adhésif multicouche sensible à la pression selon l'une quelconque des revendications précédentes, dans lequel le premier adhésif sensible à la pression comprend :
a) de 20 % en poids à 80 % en poids, de 20 % en poids à 70 % en poids, de 25 % en poids à 60 % en poids, ou même de 25 % en poids à 50 % en poids du copolymère séquencé linéaire ayant la formule M - (G)ₚ, sur la base du poids du premier adhésif sensible à la pression ; et
b) de 20 % en poids à 70 % en poids, de 20 % en poids à 60 % en poids, de 20 % en poids à 55 % en poids, de 25 % en poids à 50 % en poids ou même de 25 % en poids à 45 % en poids du ou des deuxième(s) agent(s) poisseux hydrocarboné(s), sur la base du poids du premier adhésif sensible à la pression ;
c) de 3 % en poids à 25 % en poids, de 4 % en poids à 20 % en poids, de 5 % en poids à 18 % en poids, ou même de 6 % en poids à 15 % en poids du copolymère de (méth)acrylate, sur la base du poids du premier adhésif sensible à la pression ;
d) de 1 % en poids à 15 % en poids, de 2 % en poids à 13 % en poids, de 2 % en poids à 10 % en poids, ou même de 3 % en poids à 10 % en poids du copolymère séquencé à bras multiples facultatif, ayant la formule S_{q}-Z, sur la base du poids du premier adhésif sensible à la pression ;
e) de 1 % en poids à 20 % en poids, de 2 % en poids à 15 % en poids, de 4 % en poids à 12 % en poids, ou même de 5 % en poids à 10 % en poids du copolymère di-séquencé facultatif ayant la formule T - (G), sur la base du poids du premier adhésif sensible à la pression ; et
f) facultativement, de 0,1 % en poids à 10 % en poids, de 0,5 % en poids à 8 % en poids, de 1 % en poids à 6 % en poids, ou même de 2 % en poids à 5 % en poids d'un additif de réticulation, sur la base du poids de la première mousse adhésive sensible à la pression, et dans lequel l'additif de réticulation est de préférence choisi dans le groupe de composés (méth)acrylate multifonctionnels.

13. Ensemble adhésif multicouche sensible à la pression selon l'une quelconque des revendications précédentes, qui est obtenu par co-extrusion à l'état fondu, en particulier par co-extrusion à chaud de la couche de mousse polymère et de la première couche adhésive sensible à la pression.

14. Procédé de fabrication d'un ensemble adhésif multicouche sensible à la pression selon l'une quelconque des revendications 1 à 13, qui comprend l'étape de co-extrusion à l'état fondu, en particulier de co-extrusion à chaud de la couche de mousse polymère, de la première couche adhésive sensible à la pression, et facultativement de la deuxième couche adhésive sensible à la pression.

15. Utilisation d'un ensemble adhésif multicouche sensible à la pression selon l'une quelconque des revendications 1 à 13 pour des applications industrielles, de préférence pour des applications intérieures, plus préférablement pour des applications du secteur de la construction, des applications automobiles ou des applications électroniques.
